# EUROPEAN PATENT SPECIFICATION

(11) **EP 4 373 037 B1**
(45) Date of publication and mention of the grant of the patent: **11.02.2026**
(21) Application number: 22841691.3
(22) Date of filing: 10.03.2022
(51) Int. Cl.: H04L 67/12, H04L 67/561, H04L 69/28, H04L 12/46, H04L 12/28, H04W 4/46, H04W 4/48, H04L 12/40

(54) **IN-VEHICLE COMMUNICATION DEVICE, IN-VEHICLE COMMUNICATION SYSTEM, AND COMMUNICATION METHOD**
FAHRZEUGINTERNE KOMMUNIKATIONSVORRICHTUNG, FAHRZEUGINTERNES KOMMUNIKATIONSSYSTEM UND KOMMUNIKATIONSVERFAHREN
DISPOSITIF DE COMMUNICATION DANS UN VÉHICULE, SYSTÈME DE COMMUNICATION DANS UN VÉHICULE, ET PROCÉDÉ DE COMMUNICATION

(30) Priority: 15.07.2021 JP 2021117378
(43) Date of publication of application: 22.05.2024
(73) Proprietor: Sony Group Corporation, Tokyo 108-0075 (JP)
(72) Inventor: SUGAYA, Shigeru, Tokyo 108-0075 (JP); UCHIYAMA, Hiromasa, Tokyo 108-0075 (JP); SHIMEZAWA, Kazuyuki, Tokyo 108-0075 (JP)
(74) Representative: Witte, Weller & Partner Patentanwälte mbB
(86) International application number: PCT/JP2022/010515
(87) International publication number: WO 2023/286341

(56) References cited:
- WO-A1-2021/020206
- WO-A1-2021/095491
- CN-A- 112 752 954
- JP-A- 2018 006 786
- JP-A- 2020 037 387
- JP-A- 2020 205 498
- JP-A- 2021 056 620

## Description

### Field

The present disclosure relates to an in-vehicle communication device, an in-vehicle communication system, and a communication method.

### Background

In recent years, practical application of autonomous driving, electric vehicles (EVs), and energy saving of vehicles have been promoted. In addition, with the evolution of these vehicles, a vehicle itself is connected to a network (connected cars), and many sensors are mounted on a vehicle.

In a case where many sensors are mounted on a vehicle as described above, a dedicated cable for connecting the sensors is required, which hinders weight reduction of the vehicle.

Therefore, in recent years, technology called a zone architecture has attracted attention in communication within a vehicle (intra-vehicle communication). In the zone architecture, a vehicle is divided into a plurality of zones, and a network is constructed in each of the zones.

As a network constructed in each of the zones or a network connecting zones, for example, technology using a local area network (LAN) is known. By using the LAN technology, information collected at a plurality of nodes in a multipoint manner can be transmitted in a network.

In particular, as a general-purpose LAN system, a system using Ethernet (registered trademark) is widely used for communication between information communication devices. Also in the zone architecture, construction of a system using Ethernet is studied.

In addition, in the zone architecture, in addition to wired connection, construction of a system for transmitting information by wireless connection is also studied. For example, Patent Literature 1 discloses technology of combining wired communication and wireless communication as intra-vehicle communication.

In the LAN system described above, in addition to a system that transmits information using a wired transmission path such as Ethernet, also known is a system that transmits information using a wireless transmission path such as Wi-Fi (registered trademark). For example, Patent Literature 2 discloses technology of using a wireless LAN for inter-vehicle communication.

### Citation List

### Patent Literatures

Patent Literature 1: JP 2018-006786 A
Patent Literature 2: JP 2017-215930 A
Further prior art can be found in JP 2020-205498 A, JP 2021-056620 A and CN 112 752 954 A.

### Summary

### Technical Problem

In a case where the LAN technology is used in the intra-vehicle communication, different from the case of using a dedicated cable, various types of information such as information acquired by sensors are transmitted in a mixed state in the wireless transmission path of the LAN. In addition, in the LAN system, access control is performed in a case where there is a plurality of pieces of data desired to be simultaneously transmitted, which may cause a delay in data transmission, and thus there is a disadvantage that it is not suitable for transmission of information for which immediacy is required.

In response to such a disadvantage, conventionally, technology for increasing the amount of information of data exchanged on a transmission path has been developed as LAN technology. However, in the related art, emphasis is placed on increasing the maximum transmission rate in order to increase the amount of information, and it cannot be said that sufficient studies are made on the technology related to access control.

In the LAN systems, an access control procedure that maintains compatibility with carrier sense multiple access/collision detection (CSMA/CD) is used. Therefore, in the LAN systems, there still remains a problem that a transmission delay occurs due to access control.

Meanwhile, in the intra-vehicle communication, for example, information simultaneously detected by a plurality of different sensors such as a radar device and a camera may be used as one piece of information. For example, there is a case where it is desired to recognize an object detected by a radar device and an object detected by a camera as the same one object at the same time.

However, as described above, in a case where the LAN technology is applied to the intra-vehicle communication, there is a possibility that a plurality of pieces of information cannot be synchronized due to a transmission delay caused by access control. In a case where the plurality of pieces of information cannot be synchronized, the plurality of pieces of information cannot be used as one piece of information, and for example, there is a possibility that an object detected by the radar device and an object detected by the camera at the same time are recognized as different objects.

As described above, even in a case where a transmission delay occurs due to access control, it is desirable to correctly synchronize a plurality of pieces of information.

Therefore, the present disclosure provides a mechanism capable of correctly synchronizing a plurality of pieces of information even in a case where a transmission delay occurs due to access control.

Note that the above disadvantage or object is merely one of a plurality of disadvantages or objects that can be solved or achieved by a plurality of embodiments disclosed herein.

### Solution to Problem

According to the present disclosure, an in-vehicle communication device, a communication method and an in-vehicle communication system are provided as defined in the claims. Preferred embodiments are covered by the appended dependent claims.

### Brief Description of Drawings

FIG. 1 is a diagram for explaining an example of the zone architecture.
FIG. 2 is a diagram illustrating an example of data transmission in a case where LAN technology is applied to the zone architecture.
FIG. 3 is a diagram illustrating an example of the overall configuration of an in-vehicle communication system according to an embodiment of the present disclosure.
FIG. 4 is a diagram for explaining a hierarchical structure of an in-vehicle network according to a first embodiment of the present disclosure.
FIG. 5 is a block diagram illustrating a configuration example of an in-vehicle communication device according to an embodiment of the disclosure.
FIG. 6 is a diagram for explaining a problem caused by access control.
FIG. 7 is a diagram for explaining a problem caused by access control.
FIG. 8 is a diagram for explaining a problem caused by access control.
FIG. 9 is a diagram for explaining an example of data transmission in the in-vehicle communication system according to the first embodiment of the disclosure.
FIG. 10 is a diagram illustrating an example of synthesis information according to the first embodiment of the disclosure.
FIG. 11 is a diagram illustrating another example of the synthesis information according to the first embodiment of the disclosure.
FIG. 12 is a diagram illustrating another example of the synthesis information according to the first embodiment of the disclosure.
FIG. 13 is a flowchart illustrating a flow of transmission processing according to the first embodiment of the disclosure.
FIG. 14 is a flowchart illustrating a flow of reception processing according to the first embodiment of the disclosure.
FIG. 15 is a diagram for explaining a wireless communication area of an in-vehicle communication system according to a second embodiment of the disclosure.
FIG. 16 is a diagram for explaining a wireless communication area of the in-vehicle communication system according to the second embodiment of the disclosure.
FIG. 17 is a diagram for explaining an example of management information managed by a zone control node according to the second embodiment of the disclosure.
FIG. 18 is a diagram for explaining an overview of communication by the in-vehicle communication system according to the second embodiment of the disclosure.
FIG. 19 is a diagram for explaining an overview of communication by the in-vehicle communication system according to the second embodiment of the disclosure.
FIG. 20 is a diagram for explaining a detailed example of communication by the in-vehicle communication system according to the second embodiment of the disclosure.
FIG. 21 is a flowchart illustrating a flow of transmission processing according to the second embodiment of the disclosure.
FIG. 22 is a block diagram illustrating an example of schematic configuration of a vehicle control system as an example of a mobile body control system to which the technology according to the present disclosure can be applied.
FIG. 23 is a diagram illustrating an example of installation positions of imaging sections and outside-vehicle information detecting sections.

### Description of Embodiments

Hereinafter, embodiments of the present disclosure will be described in detail by referring to the accompanying drawings. Note that, in the present specification and the drawings, components having substantially the same functional configuration are denoted by the same symbols, and redundant description is omitted.

In addition, in the present specification and the drawings, similar components of embodiments may be distinguished by attaching different alphabets or numbers after the same symbol. Note that, in a case where it is not necessary to particularly distinguish each of similar components, only the same symbol is assigned.

One or a plurality of embodiments (including examples and modifications) described below can be each implemented independently. Meanwhile, at least a part of the plurality of embodiments described below may be combined with and implemented together with at least a part of another embodiment but only insofar encompassed by the scope of the invention, which is defined by the appended claims. The plurality of embodiments may include novel features different from each as long as said embodiments do not depart from the scope of the invention as defined by the appended claims. Therefore, the plurality of embodiments can contribute to solving different objects or disadvantages or achieve different effects as long as said embodiments comprise at least all the features of the appended independent claims.

### <<1. Introduction>>

### <1.1. Zone Architecture>

As described above, in recent years, technology called the zone architecture has attracted attention in intra-vehicle communication.

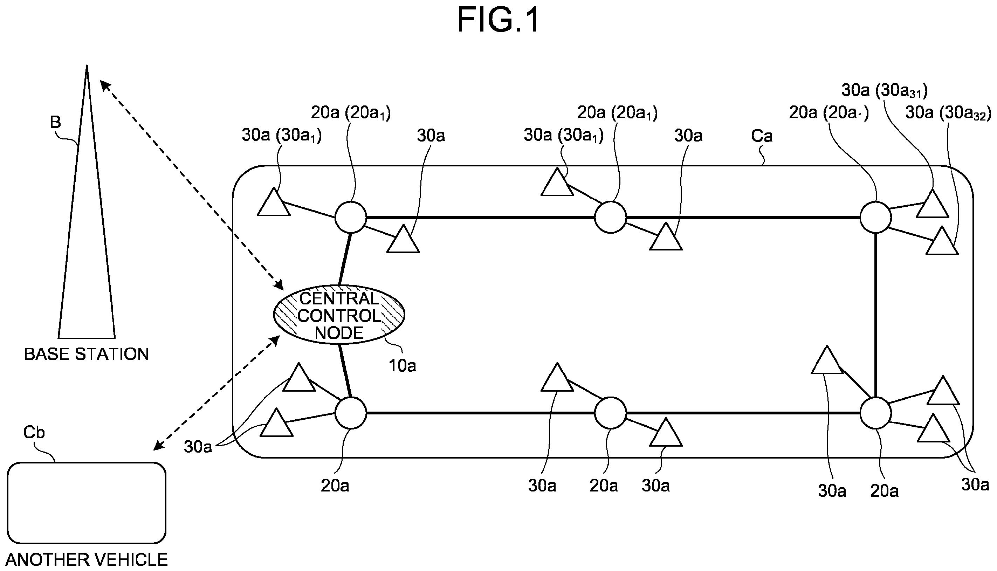

An example of the zone architecture will be described with reference to FIG. 1. FIG. 1 is a diagram for explaining an example of the zone architecture.

In the zone architecture illustrated in FIG. 1, a vehicle Ca is divided into a plurality of regions (zones), and a control node 20a (hereinafter, also referred to as a zone control node 20a) is included in each of the regions. The plurality of zone control nodes 20a is connected in a ring shape by a trunk cable, for example, and performs wired LAN communication with each other. As described above, in the vehicle Ca illustrated in FIG. 1, a ring-type wired communication network is constructed. As another connection example of the wired LAN, there is a configuration in which the plurality of zone control nodes 20a is connected to each other in a mesh shape by a trunk cable.

In addition, the zone control nodes 20a in the respective regions are each connected to one or more devices 30a by, for example, a cable and perform wired LAN communication with the devices 30a.

The devices 30a include, for example, sensors such as a camera or a ranging device, display devices such as a car navigation system or a DVD, and the like. As described above, the devices 30a include, for example, devices that are mounted on the vehicle Ca and acquire information for performing autonomous driving, perform control, or present entertainment, a vehicle status, or others to a user onboard the vehicle Ca.

A device 30a communicates with another device 30a mounted on the vehicle Ca via a zone control node 20a.

In this manner, by implementing intra-vehicle communication using the zone architecture, the number of cables and the cable length for connecting the sensors can be reduced, thereby enabling weight reduction of the vehicle, which can improve the fuel efficiency.

In addition, in use cases such as remote driving or platooning, it is necessary to access the control system of the vehicle Ca from the outside of the vehicle. In this case, the network inside the vehicle Ca (hereinafter, also referred to as an in-vehicle local area network (LAN)) needs to be connected to an external network.

Therefore, in FIG. 1, a central control node 10a is included in the vehicle Ca. The central control node 10a is connected to the zone control nodes 20a via, for example, a cable. With this configuration, the central control node 10a can communicate with the zone control nodes 20a and the devices 30a via the in-vehicle LAN.

In addition, the central control node 10a may be configured to be able to perform wireless communication with another vehicle Cb or a base station **B.** Note that in the following drawings, wired communication is indicated by a solid line, and wireless communication is indicated by a dotted line.

In this manner, by zoning the vehicle Ca and providing a zone control node 20a for each of the zones, it becomes possible to reduce the number of cables connecting the sensors or the cable length, thereby enabling weight reduction of the vehicle, which can improve the fuel efficiency. Furthermore, by providing the central control node 10a in the in-vehicle LAN as necessary and connecting to a network outside the vehicle via the central control node 10a, security can be improved.

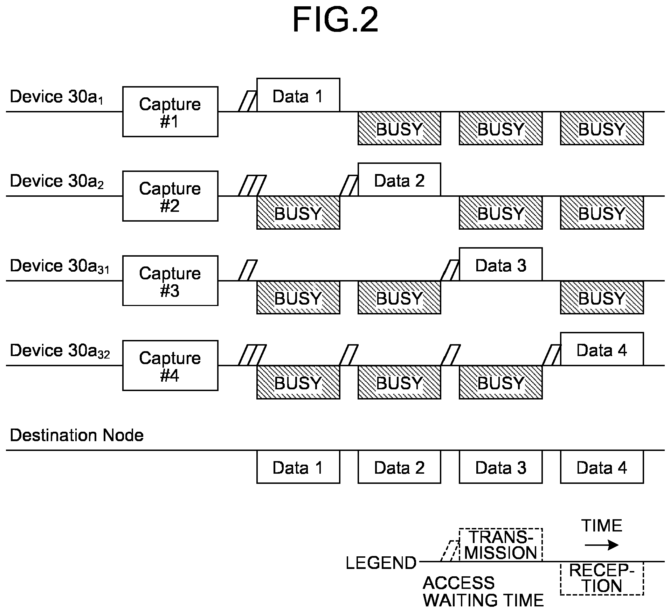

FIG. 2 is a diagram illustrating an example of data transmission in a case where the LAN technology is applied to the zone architecture. Here, for example, it is presumed that a device 30ₐ₁ belonging to a first zone managed by a zone control node 20ₐ₁ transmits data to the central control node 10a which is a receiving node (destination node). It is also presumed that a device 30ₐ₂ belonging to a second zone managed by a zone control node 20ₐ₂, a device 30ₐ₃₁ belonging to a third zone managed by a zone control node 20ₐ₃₁, and a device 30ₐ₃₂ belonging to a third zone similarly transmit data to the central control node 10a.

Note that the devices 30ₐ₁, 30ₐ₂, 30ₐ₃₁, and 30ₐ₃₂ are, for example, cameras placed in the respective zones and transmit images (captured images) #1 to #4 that are simultaneously captured as data to the central control node 10a.

As illustrated in FIG. 2, the devices 30ₐ₁, 30ₐ₂, 30ₐ₃₁, and 30ₐ₃₂ capture images #1 to #4 at the same timing. In the example illustrated in FIG. 2, after a predetermined access waiting time has elapsed, the device 30ₐ₁ obtains an access right (transmission right) and transmits the captured image #1 as data #1 to the central control node 10a.

In a case where all the devices are always connected as one network and operate in the same protocol, while the device 30ₐ₁ is transmitting the data #1, the other devices 30ₐ₂ to 30ₐ₃₂ are busy. In the example illustrated in FIG. 2, after the device 30ₐ₁ completes the transmission, the device 30ₐ₂ acquires the access right and transmits the captured image #2 as data #2 to the central control node 10a.

Similarly, the device 30ₐ₃₁ and the device 30ₐ₃₂ sequentially acquire the access right and transmit the captured images #3 and #4 to the central control node 10a as data #3 and #4, respectively.

As described above, in the conventional in-vehicle LAN technology, the devices 30ₐ₁, 30ₐ₂, 30ₐ₃₁, and 30ₐ₃₂ cannot simultaneously perform transmission even of information (for example, captured images #1 to #4) acquired simultaneously. Depending on the size of data, the number of pieces of data that can be sent to the transmission path may be limited to one. Therefore, a plurality of the central control nodes 10a cannot simultaneously receive the information, and a delay due to access control may occur.

Therefore, in the related art, in order to achieve time synchronization among pieces of data in which a transmission delay is caused by access control, information indicating timing at which data is collected is added to the data and transmitted.

Even in a case where a general-purpose network (LAN) is used, clock synchronization can be achieved to some extent in the case of a wired network such as Ethernet described above.

However, in a case where the in-vehicle LAN is constructed using a wireless network, since there is a section of a wireless transmission path between a transmission device and a reception device, accurate clock synchronization cannot be performed between the transmission device and the reception device.

For example, a system constructed in a vehicle may include a mixture of a wireless network and a wired network. In a case where a LAN is used in such a system, there is a possibility that a difference occurs between timing at which the reception device receives data collected by the transmission device connected to the wired network and timing at which the reception device receives data collected by the transmission device connected to the wireless network. In this case, the reception device receives data that is not synchronized.

That is, in the in-vehicle network system, even when a plurality of transmission devices tries to transmit data simultaneously, the number of pieces of data sent to the network is limited to, for example, one. Therefore, there occurs a difference in timing at which the reception device receives these pieces of data.

Therefore, a mechanism is desired in which the reception device can acquire information of timing at which the transmission device has collected data regardless of the timing at which the reception device receives the data.

### <<2. First Embodiment>>

### <2.1. Configuration Example of In-Vehicle Communication System>

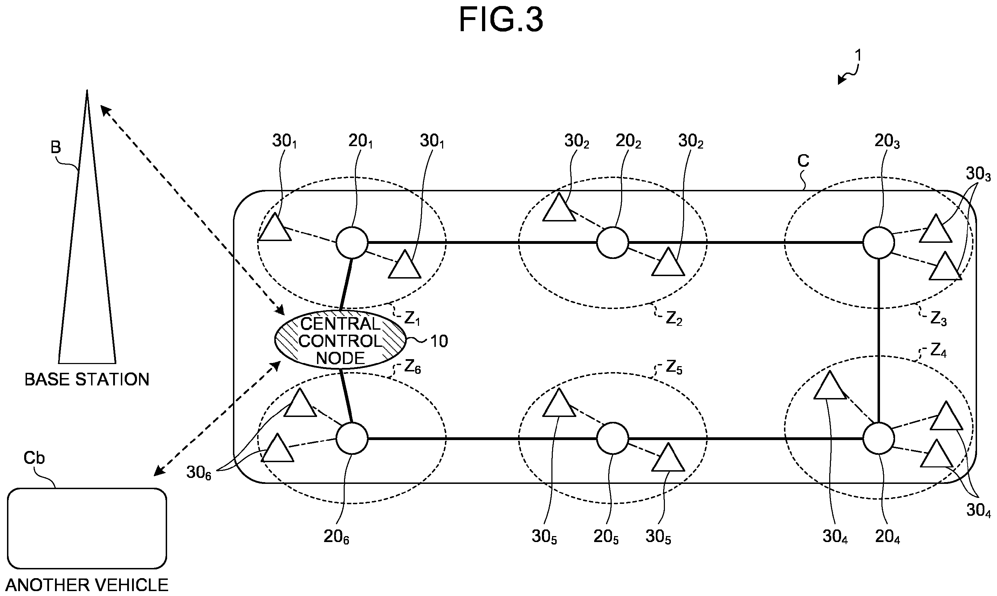

FIG. 3 is a diagram illustrating an example of an overall configuration of the in-vehicle communication system 1 according to an embodiment of the present disclosure. As illustrated in FIG. 3, the in-vehicle communication system 1 according to the present embodiment is included in a vehicle C. The in-vehicle communication system 1 includes a central control node 10, zone control nodes 20, and devices 30.

The central control node 10 is an in-vehicle communication device that controls communication by an in-vehicle LAN network. The central control node 10 is connected to the zone control nodes 20 in a ring shape via a trunk cable and performs wired communication with the zone control nodes 20. The central control node 10 also communicates with the devices 30 via the zone control nodes 20.

In addition, the central control node 10 is connected to an external network via wireless communication. The central control node 10 communicates, for example, with the base station B through Uu link communication in 3GPP or communicates with the other vehicle Cb through sidelink communication.

The devices 30 are in-vehicle communication devices that acquire and notify various types of information and others. The devices 30 include, for example, a sensor such as a camera or a ranging device, a control device that controls an engine or the like, a display device such as a car navigation system or a DVD, and the like. The devices 30 are, for example, mounted on the vehicle C and include a device for acquiring information for performing autonomous driving and performing control and a device for presenting entertainment, a vehicle status, and others to a user onboard the vehicle C.

A device 30 is included in each of a plurality of divided regions (zones) in the vehicle C. A plurality of devices 30 may be included in one zone. A device 30 performs wireless communication conforming to the wireless LAN standards with a zone control node 20 corresponding to each of the regions. Note that FIG. 3 illustrates a case where all the devices 30 perform wireless communication with a zone control node 20; however, there may be a device 30 that performs wired communication with a zone control node 20.

A device 30 communicates with other devices (e.g., other devices 30, other zone control nodes 20, or the central control node 10A via a zone control node 20.

A zone control node 20 is included in each of the plurality of divided regions (zones) in the vehicle C. The zone control node 20 is connected in a ring shape via the trunk cable and performs wired communication conforming to the wired LAN standards with the other zone control nodes 20 and the central control node 10. In the example of FIG. 3, the vehicle C is divided into six zones #1 to #6, and zone control nodes 20₁ to 20₆ are each included in one of the zones. Note that the connection of the trunk cable is not limited to the ring shape and may be connected in a mesh shape.

A zone control node 20 performs wireless communication conforming to the wireless LAN with a device 30 belonging to the zone in which the zone control node 20 itself is disposed. A zone control node 20 has a communication area Z corresponding to the size of the zone and performs wireless communication with a device 30 in the communication area Z. In this case, the zone control node 20 functions as an access point AP of the wireless LAN. Hereinafter, in a case where a zone control node 20 operates as an AP, the zone control node 20 is also referred to as an AP 20.

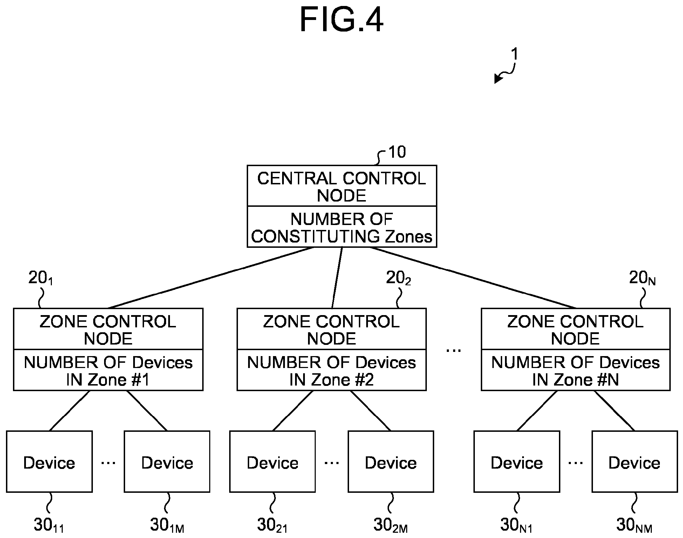

FIG. 4 is a diagram for explaining a hierarchical structure of the in-vehicle network according to the first embodiment of the present disclosure. As illustrated in FIG. 4, the central control node 10 functioning as a network controller is disposed in the in-vehicle network of the vehicle C. The central control node 10 manages the number of zones included in the in-vehicle network as the number of constituting zones.

In addition, N zone control nodes 20₁ to 20_{N} are arranged below the central control node 10. A zone control node 20 manages the number of devices 30 belonging to the zone to which the zone control node 20 itself belongs as the number of devices in zone #n (n = 1 to N).

M devices 30 are included below each of the zone control nodes 20. Note that, in FIG. 4, each zone #n includes M devices 30, M being the same value however, it is not limited thereto. The number of devices 30 included in each zone #n may be different from each other or the same.

### <2.2. Configuration Example of In-Vehicle Communication Device>

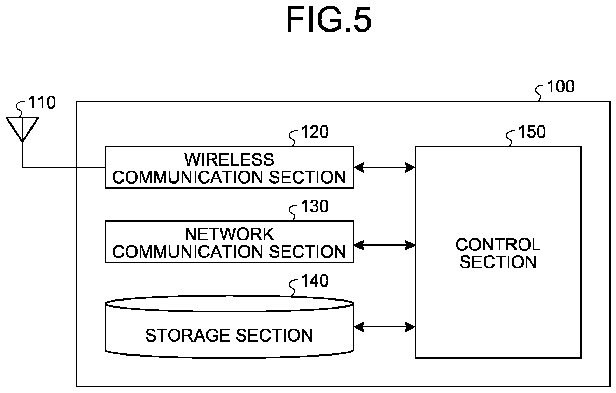

FIG. 5 is a block diagram illustrating a configuration example of an in-vehicle communication device 100 according to an embodiment of the disclosure. The in-vehicle communication device 100 functions as each of the nodes or the devices 30 of the in-vehicle communication system 1. Referring to FIG. 5, the in-vehicle communication device 100 includes an antenna section 110, a wireless communication section 120, a network communication section 130, a storage section 140, and a control section 150.

### (1) Antenna Section 110

The antenna section 110 radiates a signal output from the wireless communication section 120 into space as a radio wave. The antenna section 110 further converts a radio wave in space into a signal and outputs the signal to the wireless communication section 120. Note that the antenna section 110 of the present embodiment includes a plurality of antenna elements and can form a beam.

### (2) Wireless Communication Section 120

The wireless communication section 120 transmits and receives a signal. For example, the wireless communication section 120 transmits a signal to another device and receives a signal from another device. The wireless communication section 120 can communicate by forming a plurality of beams by the antenna section 110.

For example, in a case where the in-vehicle communication device 100 functions as the central control node 10, the wireless communication section 120 communicates with the base station B or the other vehicle Cb via an external network. In this case, the wireless communication section 120 performs communication in conformity with a cellular communication system such as NR, LTE, W-CDMA, or cdma2000.

Alternatively, in a case where the in-vehicle communication device 100 functions as a zone control node 20, the wireless communication section 120 communicates with a device 30. In a case where the in-vehicle communication device 100 functions as a device 30B, the wireless communication section 120 communicates with a zone control node 20. In this case, the wireless communication section 120 performs communication in conformity with, for example, the wireless LAN system.

### (3) Network Communication Section 130

The network communication section 130 transmits and receives information. For example, the network communication section 130 transmits information to another in-vehicle communication device 100 and receives information from another in-vehicle communication device. For example, in a case where the in-vehicle communication device 100 functions as the central control node 10, the network communication section 130 communicates with the zone control nodes 20 via the trunk cable. In a case where the in-vehicle communication device 100 functions as a zone control node 20, the network communication section 130 communicates with the central control node 10 and other zone control nodes 20.

### (4) Storage Section 140

The storage section 140 temporarily or permanently stores programs and various data for the operation of the in-vehicle communication device 100.

### (5) Control Section 150

The control section 150 is a controller that controls each of the sections of the in-vehicle communication device 100. The control section 150 is implemented by a processor such as a CPU or an MPU. For example, the control section 150 is implemented by the processor executing various programs stored in a storage device inside the in-vehicle communication device 100 using a RAM or the like as a work area. Note that the control section 150 may be implemented by an integrated circuit such as an ASIC or an FPGA. Any of the CPU, the MPU, the ASIC, and the FPGA can be deemed as a controller.

Note that, in a case where the in-vehicle communication device 100 functions as a node that performs wireless communication but does not perform wired communication as the devices 30, the network communication section 130 described above may be omitted. Alternatively, the device 30 may perform both wireless communication and wired communication. In this case, the device 30 is connected to a zone control node 20 via wireless and wired transmission paths.

Furthermore, in a case where the in-vehicle communication device 100 functions as a device 30 that is, for example, a sensor that acquires information inside and outside the vehicle, the in-vehicle communication device 100 may include a sensor section (not illustrated) that acquires the information. Furthermore, in a case where the in-vehicle communication device 100 is a device 30 that presents information to a user like a car navigation system, an input and output section (not illustrated) may also be included. As described above, the in-vehicle communication device 100 can have a configuration corresponding to a function to be implemented.

### <2.3. Problems Caused by Access Control>

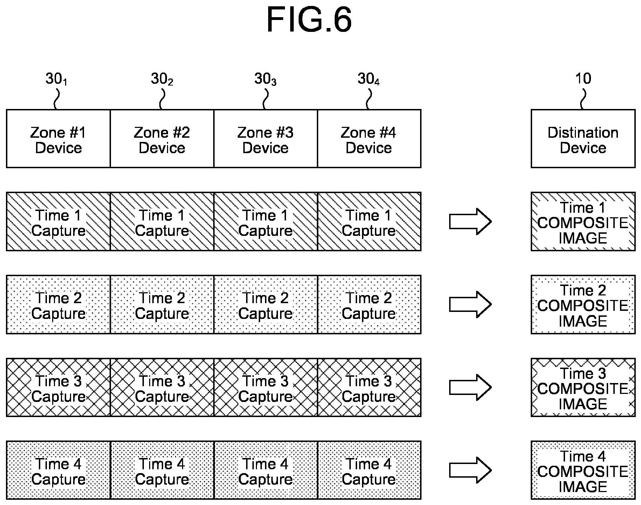

FIGS. 6 to 8 are diagrams for explaining problems caused by access control. As illustrated in FIG. 6, devices 30₁ to 30₄ belonging to zones #1 to #4 each capture an image of the surroundings of the vehicle C at the same timing and transmit the captured image to the central control node 10, for example. The devices 30₁ to 30₄ capture an image in a predetermined period and transmit the captured image to the central control node 10. In FIG. 6, the devices 30₁ to 30₄ capture an image four times from Time 1 to Time 4 and transmit the captured images to the central control node 10.

The central control node 10, for example, generates a composite image by synchronizing and combining the captured images captured by the devices 30₁ to 30₄ at the same timing. For example, the central control node 10 combines the captured images captured by the devices 30₁ to 30₄ at Time 1 to generate one composite image. Alternatively, the central control node 10 may detect the same object included in the captured images captured at the same timing. Note that the devices 30₁ to 30₄ transmit the captured images without including synthesis information (for example, information regarding a delay) for combining the captured images.

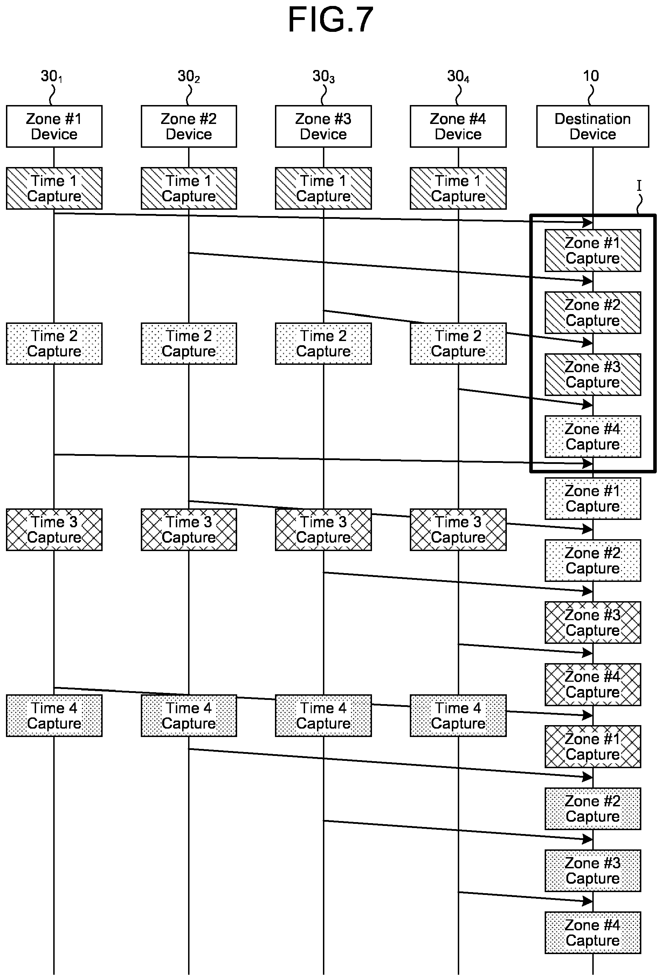

Here, it is based on the premise that access control has been performed in a case where the captured images are transmitted from the devices 30₁ to 30₄ to the central control node 10. In this case, as illustrated in FIG. 7, an access control delay occurs by the time when the captured images transmitted by the respective devices 30 arrive at the central control node 10, and there is a possibility that not all pieces of information arrive by a desired time. Note that illustrated in FIG. 7 is a case where the number of captured images that can be transmitted through an in-vehicle communication network is limited to one by the access control.

As illustrated in FIG. 7, for example, the devices 30₁ to 30₄ attempts to simultaneously transmit captured images captured at time #1 (Time 1) to the central control node 10. However, as described above, the number of captured images that can be transmitted through, for example, a trunk cable (wired transmission path) of the in-vehicle communication network is limited to one. Therefore, the devices 30₁ to 30₄ each transmit a captured image after acquiring the access right after an access waiting time has elapsed.

As a result, each of the captured images transmitted by the devices 30₁ to 30₃ is transmitted to the central control node 10 with a time difference. At this point, for example, let us presume that the timing at which the device 30₄ acquires the access right is after time #2 (Time 2) at which the devices 30 capture a captured image next. In this case, as illustrated in FIG. 7, the device 30₄ transmits the captured image captured at time #2 (Time 2).

The devices 30₁ and 30₂ transmit the captured images captured at time #2 (Time 2) at the timing when the access right is acquired next. The devices 30₃, 30₄, and 30₁ transmit captured images captured at time #3 (Time 3) at the next timing of acquiring the access right.

Likewise, the devices 30₃, 30₃, and 30₄ transmit captured images captured at time #4 (Time 4) at the next timing of acquiring the access right.

In this manner, each of the devices 30 may acquire the access right after the timing of capturing a captured image when access control is performed, and there are cases where not all captured images are transmitted to the central control node 10.

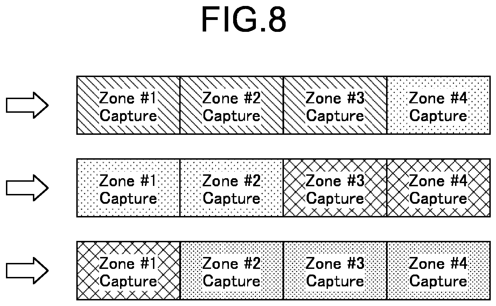

Therefore, as illustrated in FIG. 8, the central control node 10 acquires captured images from the devices 30 in zones #1 to #4; however, the acquired captured images include images with different capturing timings due to an access control delay.

As described above, for example, the synthesis information to be used for combining the captured images, such as information regarding an access control delay, is not included in the captured images. Therefore, when acquiring the captured images from the devices 30 in zones #1 to #4, the central control node 10 generates a composite image from the captured images as they are regardless of the time of capture.

As described above, if the central control node 10 cannot acquire synthesis information such as an access control delay, the central control node 10 composes captured images (see an area I in FIG. 7) captured at different times and performs analysis, and an error may occur in an analysis result.

### <2.4. Overview of Communication Method>

Therefore, in the in-vehicle communication system 1 according to the first embodiment of the present disclosure, for example, a transmission device (for example, device 30) adds, to data, synthesis information for a reception device (for example, the central control node 10) to combine a plurality of pieces of data (for example, captured images) and transmits the data.

As a result, even when a transmission delay occurs due to access control, the reception device can synchronize a plurality of pieces of data and combine the pieces of data.

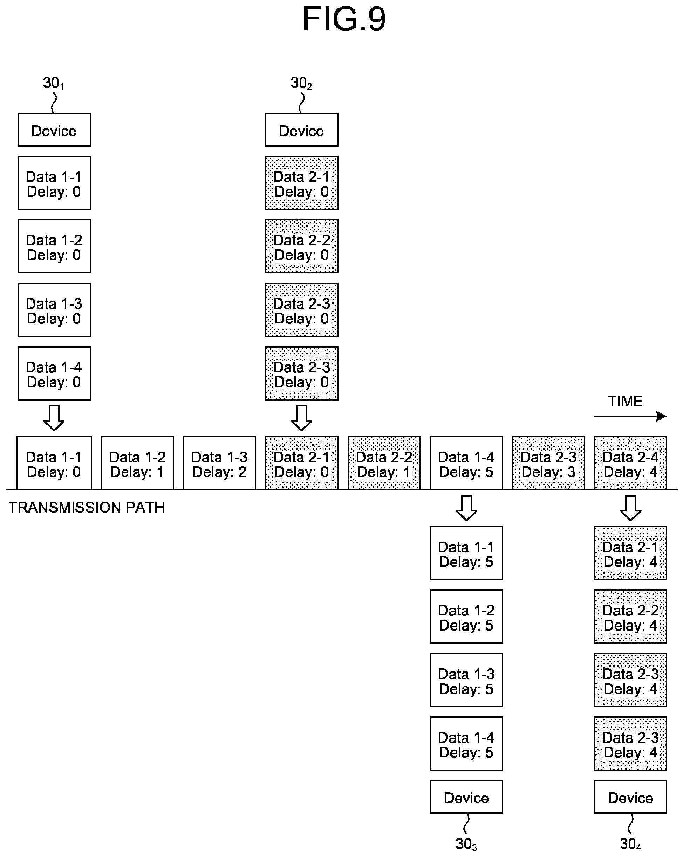

FIG. 9 is a diagram for describing an example of data transmission in a plurality of paths in the in-vehicle communication system 1 according to the first embodiment of the present disclosure. In FIG. 9, the device 30₁ belonging to zone #1 and the device 30₂ belonging to zones #2 transmit data as transmission devices, and the device 30₃ belonging to zone #3 and the device 30₄ belonging to zone #4 receive data as reception devices.

For example, the device 30₁ divides data into sizes that can be transmitted in one transmission opportunity and generates four pieces of Data 1-1 to 1-4. The device 30₁ stores the four pieces of Data 1-1 to 1-4 in a transmission buffer in a state without an access control delay (Delay: 0).

When acquiring the access right as a result of access control, the device 30₁ sequentially transmits Data 1-1 to 1-4 stored in the transmission buffer. In the example of FIG. 9, first, the device 30₁ transmits Data 1-1 by adding the synthesis information (Delay: 0) indicating that there is no delay due to the access control.

Subsequently, as a result of the access control, the device 30₁ transmits Data 1-2 as Delay: 1 and transmits Data 1-3 as Delay: 2.

Here, let us presume that the device 30₂ also tries to transmit data. The device 30₂ divides data into sizes that can be transmitted in one transmission opportunity and generates four pieces of Data 2-1 to 2-4. The device 30₂ stores the four pieces of Data 2-1 to 2-4 in the transmission buffer in a state without an access control delay (Delay: 0) and attempts to acquire the access right.

In the example in FIG. 9, after the device 30₁ transmits Data 1-3, the device 30₂ acquires the access right and transmits Data 2-1 as Delay: 0. As a result, for example, Data 1-4 is added with Delay: 3, as synthesis information indicating a delay due to access control, and is stored in the transmission buffer.

After the device 30₂ transmits Data 2-1, the device 30₂ subsequently acquires the access right. As a result, the device 30₂ transmits Data 2-2 as Delay: 1. Data 1-4 is, for example, added with Delay: 4, as synthesis information indicating a delay due to access control, and is stored in the transmission buffer.

After the device 30₂ transmits Data 2-2, the device 30₁ acquires the access right. As a result, the device 30₁ transmits Data 1-4 as Delay: 5. As a result, for example, Data 2-3 and Data 2-4 are added with Delay: 2, as synthesis information indicating a delay due to access control, and is stored in the transmission buffer.

With the transmission of Data 1-4, all pieces of Data 1-1 to 1-4 transmitted by the device 30₁ reach the device 30₃. The device 30₃ can grasp that all pieces of Data 1-1 to 1-4 have been received at the timing of Delay: 5 by confirming the synthesis information added to Data 1-4. In this case, the device 30₃ goes back by timing corresponding to the information (Delay: 5) regarding the delay included in the synthesis information and combines Data 1-1 to 1-3, which have been received earlier, and Data 1-4.

Then, the device 30₂ acquires an access right and transmits Data 2-3 as Delay: 3 and Data 2-4 as Delay: 4.

With the transmission of Data 2-4, all pieces of Data 2-1 to 2-4 transmitted by the device 30₂ reach the device 30₄. The device 30₄ can grasp that all pieces of Data 2-1 to 2-4 have been received at the timing of Delay: 4 by confirming the synthesis information added to Data 2-4. In this case, the device 30₄ goes back by timing corresponding to the information (Delay: 4) regarding the delay included in the synthesis information and combines Data 2-1 to 2-3, which have been received earlier, and Data 2-4.

Note that the synthesis information may include information other than delay information related to a delay due to access control. The synthesis information may include, for example, synthesis target information indicating that the transmission data is a target of synthesis processing or output timing information regarding timing at which a reception device outputs data. The output timing information is, for example, information indicating timing at which the reception device combines and outputs data.

The reception device can confirm the timing at which all pieces of the divided data transmitted from one device 30 are received by checking the delay information. Furthermore, the reception device can combine and output data collected at the same timing by confirming the output timing information of data transmitted by a plurality of devices 30.

Note that illustrated in FIG. 9 is a case where the device 30₁ and the device 30₂ transmit data as transmission devices and the device 30₃ and the device 30₄ receive data as reception devices; however, it is not limited thereto. For example, a zone control node 20 may operate as a transmission device or a reception device, and the central control node 10 may operate as a transmission device or a reception device.

### <2.5. Example of Synthesis Information>

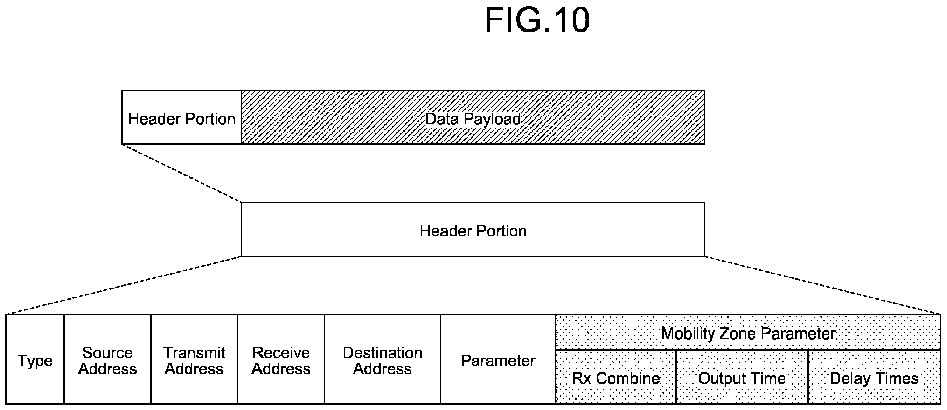

FIG. 10 is a diagram illustrating an example of synthesis information according to the first embodiment of the disclosure. The example illustrated in FIG. 10 illustrates a case where synthesis information is added to a header of transmission data.

The synthesis information is described in, for example, any header portion added to a payload of the transmission data. For example, as a general MAC header structure, at least one of Type indicating a format, Source Address indicating a transmission source, Transmit Address indicating a transmission source, Receive Address indicating a reception destination, or Destination Address indicating a transmission destination is set. Furthermore, parameters (Parameter) of layers necessary for communication are set as necessary.

In the first embodiment of the disclosure, in addition to the above, Mobility Zone Parameter for combining and processing data by a reception device is set as the synthesis information.

Mobility Zone Parameter may include at least one of the following parameters.
· Synthesis processing information (Rx Combine) indicating that the data is to be subjected to synthesis processing on the receiving side
· Output timing information (Output Time) regarding timing of outputting data
· Delay information related to access control delay (Delay Times)

Note that the delay information can include information of occurrence of an access control delay and information regarding the delay time.

Moreover, the synthesis information is not limited to the example described above. The synthesis information may be any information used when a reception device performs data synthesis processing, and the synthesis information may include information other than the above-described information.

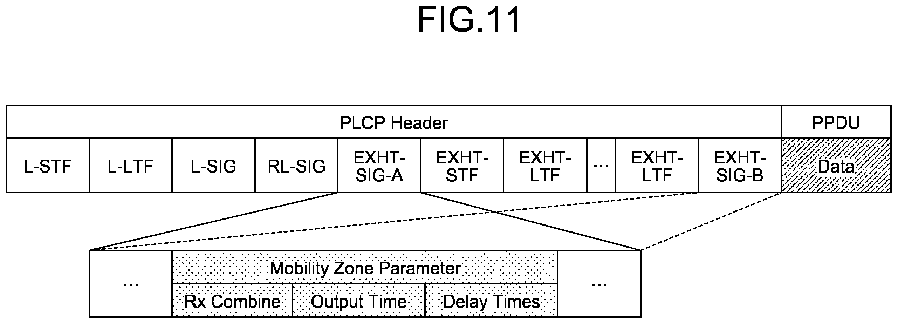

FIG. 11 is a diagram illustrating another example of the synthesis information according to the first embodiment of the disclosure. The example illustrated in FIG. 11 illustrates a case where the zone control node 20 operating as an access point of a wireless LAN transmits transmission data by adding synthesis information thereto.

The data illustrated in FIG. 11 includes a predetermined physical layer convergence protocol header (PLCP header) and a physical layer protocol data unit (PPDU) .

The PLCP header includes the following fields.
· Short training field L-STF
· Long training field L-LTF
· Signal field L-SIG
· Repeated signal field RL-SIG
· First signal field EXHT-SIG-A
· Short training field EXHT-STF
· Long training field EXHT-LTF
· First signal field EXHT-SIG-B

Note that a plurality of EXHT-LTFs may be included in the PLCP header. In addition, EXHT-SIG-A, EXHT-STF, EXHT-LTF, and EXHT-SIG-B are fields standardized as next-generation wireless LAN standards.

Data to be actually transmitted is stored in PPDU.

The synthesis information is stored in EXHT-SIG-A of the above-described PLCP header. Note that the synthesis information includes the same information as that in the example of FIG. 10, and thus description thereof is omitted.

Note that, in the PLCP header, the synthesis information may be stored in EXHT-SIG-B. The synthesis information may be stored in any field of the PLCP header.

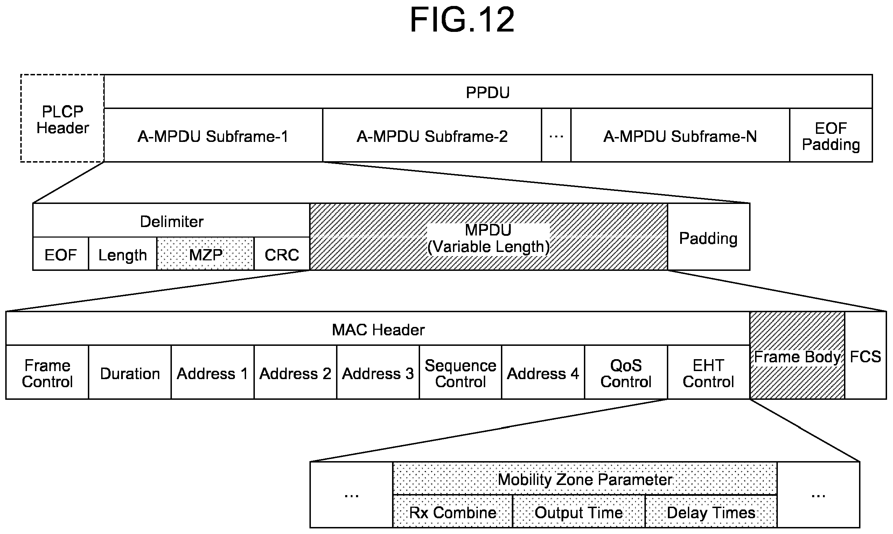

FIG. 12 is a diagram illustrating another example of the synthesis information according to the first embodiment of the disclosure. The example illustrated in FIG. 12 illustrates a case where the zone control node 20 operating as an access point of a wireless LAN transmits transmission data by adding synthesis information thereto.

The example of FIG. 12 illustrates a case where the synthesis information is included in a header present in PPDU or a delimiter portion similar thereto.

Illustrated in FIG. 12 is a case where a plurality of MPDUs is aggregated as an A-MPDU frame as an example of the structure of the PPDU. In the A-MPDU frame, a plurality of A-MPDU subframes is consecutively arranged, and a delimiter is added to a head of each of the A-MPDU subframes.

The synthesis information is stored in the delimiter as Mobility Zone Parameter (MZP). Note that although illustrated in FIG. 12 is a case where the synthesis information is included in the leading A-MPDU subframe, the A-MPDU subframe including the synthesis information is not limited to the leading A-MPDU subframe and may be any A-MPDU subframe. For example, the synthesis information may be included in an A-MPDU subframe in the tail.

Furthermore, the synthesis information may be stored in a portion corresponding to a MAC header in each of MPDUs included in the A-MPDU frame. Note that although illustrated in FIG. 12 is a case where the synthesis information is stored in both the delimiter of the A-MPDU subframe and the MAC headers; however, it is not limited thereto. The synthesis information may be stored in one of the delimiter of the A-MPDU subframe or the MAC headers.

### <2.6. Communication Processing>

### <2.6.1. Transmission Processing>

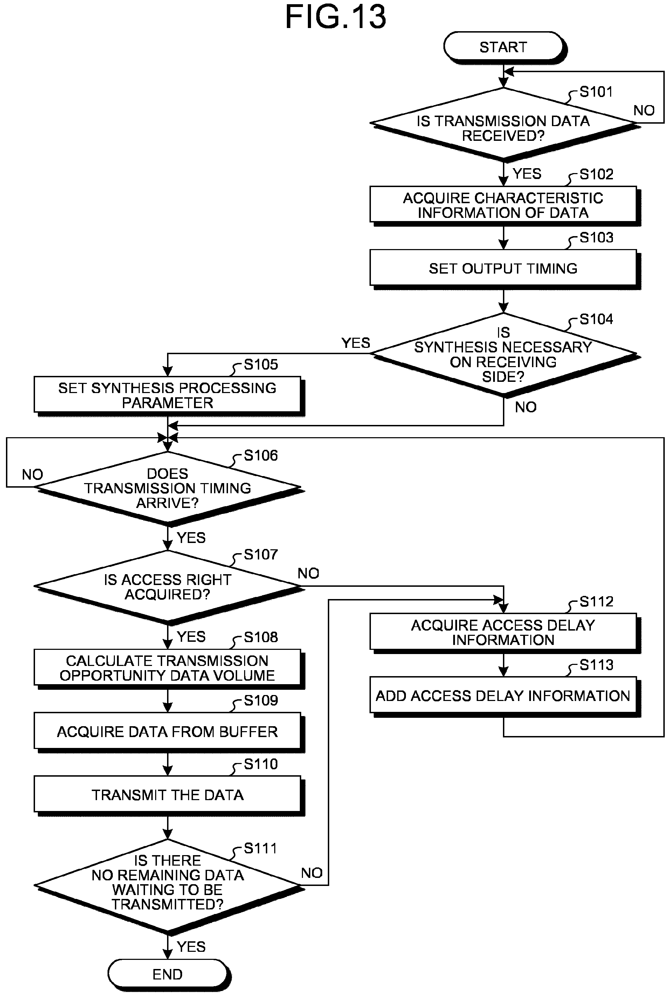

FIG. 13 is a flowchart illustrating a flow of transmission processing according to the first embodiment of the disclosure. The transmission processing illustrated in FIG. 13 is executed by a transmission device.

For example, the transmission device determines whether or not transmission data is received from a sensor section (not illustrated) or other sections via an interface (Step S101). If no transmission data is received (Step S101; No), the transmission device returns to Step S101 and waits for reception of transmission data.

On the other hand, if transmission data is received (Step S101; Yes), the transmission device acquires characteristic information of the application of the transmission data (Step S102). The transmission device sets timing at which an output device outputs data in accordance with the acquired characteristic information (Step S103).

Next, the transmission device determines whether or not it is necessary for the reception device to perform synthesis processing on the transmission data (Step S104). If it is not necessary to perform the synthesis processing (Step S104; No), the transmission device proceeds to Step S106. If it is necessary to perform the synthesis processing (Step S104; Yes), the transmission device sets synthesis processing parameters (synthesis processing information) (Step S105).

The transmission device determines whether or not the transmission timing has arrived (Step S106). If the transmission timing has not arrived (Step S106; No), the transmission device returns to Step S06 and waits for the arrival of the transmission timing.

If the transmission timing has arrived (Step S106; Yes), the transmission device determines whether or not an access right (access transmission right) is acquired (Step S107). If no access right is acquired (Step S107; No), the transmission device proceeds to Step S112.

If the access right is acquired (Step S107; Yes), the transmission device calculates the transmission opportunity data volume (Step S108). For example, the transmission device calculates the maximum data volume corresponding to a duration in which transmission can be performed in one transmission opportunity.

The transmission device acquires data of the calculated data volume from a buffer (Step S109) and transmits the data (Step S110). The transmission device determines whether or not there remains data waiting to be transmitted (Step S111). If there is no remaining data waiting to be transmitted (Step S111; Yes), the transmission device ends the processing.

If there remains data waiting to be transmitted (Step S111; No), the transmission device acquires access delay information (Step S112) and adds the access delay information to a delay parameter (delay information) (Step S113). The transmission device which has added the access delay information returns to Step S106 and waits for the arrival of the transmission timing.

Note that, although it is presumed herein that the transmission device acquires the transmission data from the sensor section, it is not limited thereto. For example, in a case where the zone control node 20 operates as a transmission device, transmission data is obtained from a device 30.

### <2.6.2. Reception Processing>

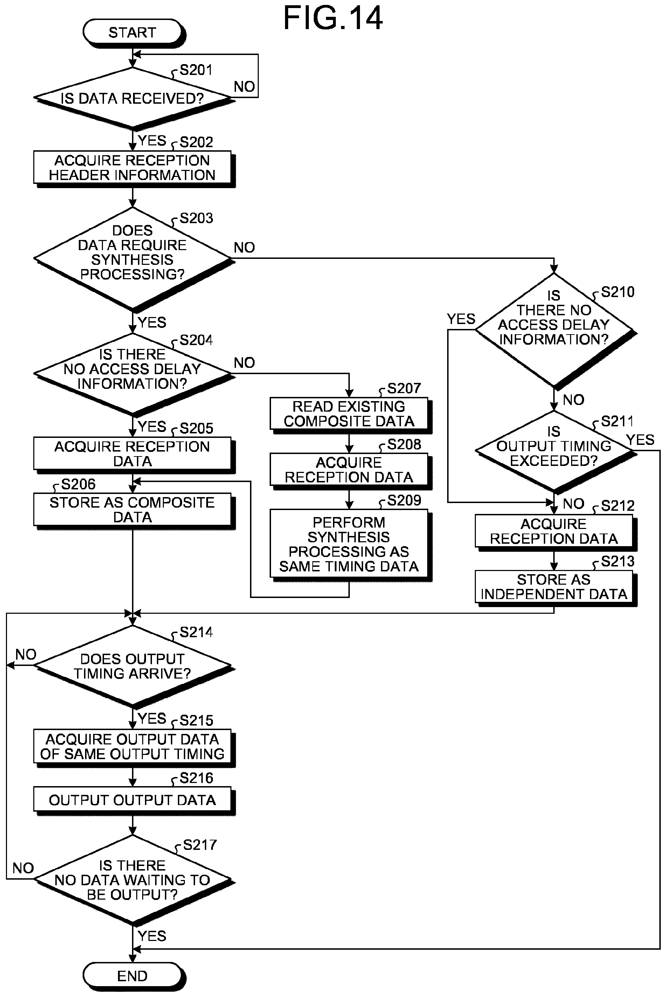

FIG. 14 is a flowchart illustrating a flow of reception processing according to the first embodiment of the disclosure. The reception processing illustrated in FIG. 14 is executed by a reception device.

For example, the reception device determines whether or not data is received from another device (for example, zone control node 20) (Step S201). If no data is received (Step S201; No), the reception device returns to Step S201 and waits for reception of data.

On the other hand, if data is received (Step S201; Yes), the reception device acquires reception header information from the data (Step S202). The reception device determines whether or not the received data requires synthesis processing in accordance with the acquired header information (Step S203).

If it is not necessary to perform the synthesis processing (Step S203; No), the reception device proceeds to Step S210. If it is necessary to perform the synthesis processing (Step S203; Yes), the reception device determines whether or not there is no access delay information in the received data (Step S204).

If there is no access delay information in the received data (Step S204; Yes), the reception device acquires the reception data (Step S205) and stores the reception data as composite data (Step S206).

If the received data includes the access delay information (Step S204; No), the reception device reads data (existing composite data) which has been previously received and already subjected to the synthesis processing and is stored (Step S207) and acquires the current reception data (Step S208). The reception device performs synthesis processing using the read existing composite data and the reception data as data at the same timing (Step S209), returns to Step S206, and stores the data on which the synthesis processing has been performed as composite data.

Here, if the transmission device determines in Step S203 that the data does not require the composite data processing (Step S203; No), the transmission device determines whether or not there is no access delay information in the received data (Step S210).

If there is no access delay information in the received data (Step S210; Yes), the reception device proceeds to Step S212. If the received data includes the access delay information (Step S210; No, the reception device determines whether or not output timing of the reception data has passed (Step S211).

If the output timing has passed (Step S211; Yes), the reception device discards the received data and ends the reception processing. If the output timing has not passed (Step S211; No), the reception device acquires the reception data (Step S212) and stores the acquired reception data as uncombined independent data (Step S213).

The reception device having stored the composite data in Step S206 or stored the independent data in Step S213 determines whether or not output timing of the composite data or the independent data (hereinafter, also simply referred to as output data) has arrived (Step S214).

If the output timing has not arrived (Step S214; No), the flow returns to Step S214 and waits for the arrival of the output timing. If the output timing has arrived (Step S214; Yes), the reception device acquires output data of the same timing (Step S215), and outputs the output data (Step S216).

The reception device determines whether or not there is no data waiting to be output (Step S217). That is, the reception device determines whether or not there is no output data whose output timing has not arrived.

If there is data waiting to be output (Step S217; No), the flow returns to Step S214 and waits for the arrival of the output timing of the data waiting to be output. If there is no data waiting to be output (Step S217; Yes), the reception device ends the processing.

As described above, a device 30 (an example of the in-vehicle communication device) according to the first embodiment of the present disclosure includes the wireless communication section 120 (an example of the communication section) and the control section 150. The wireless communication section 120 performs wireless communication with a zone control node 20 disposed in one of the divided zones in the vehicle C and transmits data to a reception device (for example, the central control node 10, the zone control nodes 20, and the other devices 30) via the zone control node 20. The control section 150 adds, to first data, synthesis information to be used when a reception device combines data and another piece of data.

As a result, even when a transmission delay due to access control occurs for data, the reception device that has received the data can combine a plurality of pieces of data in synchronization by using the synthesis information.

Note that, although it is presumed herein that the device 30 adds the synthesis information and transmits the data; however, it is not limited thereto. In a case where a delay occurs due to access control, it is only required that the synthesis information be added, and thus a node control zone 20 or the central control node 10 may add the synthesis information and transmit the data.

### <<3. Second Embodiment>>

The in-vehicle communication system 1 of the disclosure includes a wired transmission path and a wireless transmission path. At this point, an access control delay of transmission data may become large due to an influence of the access control delay occurring in the wireless transmission path. The wireless transmission path tends to have a small communication capacity and unstable communication as compared with the wired transmission path. Therefore, the access control delay generated in the wireless transmission path may be larger than that in the wired transmission path.

Meanwhile, the communication area of the wired transmission path is limited between communication devices to which cables are actually connected, whereas the communication area of the wireless transmission path is within an area where radio waves of the communication devices reach. Therefore, in wireless communication, the communication area can be modified with a communication device performing power control of the radio waves.

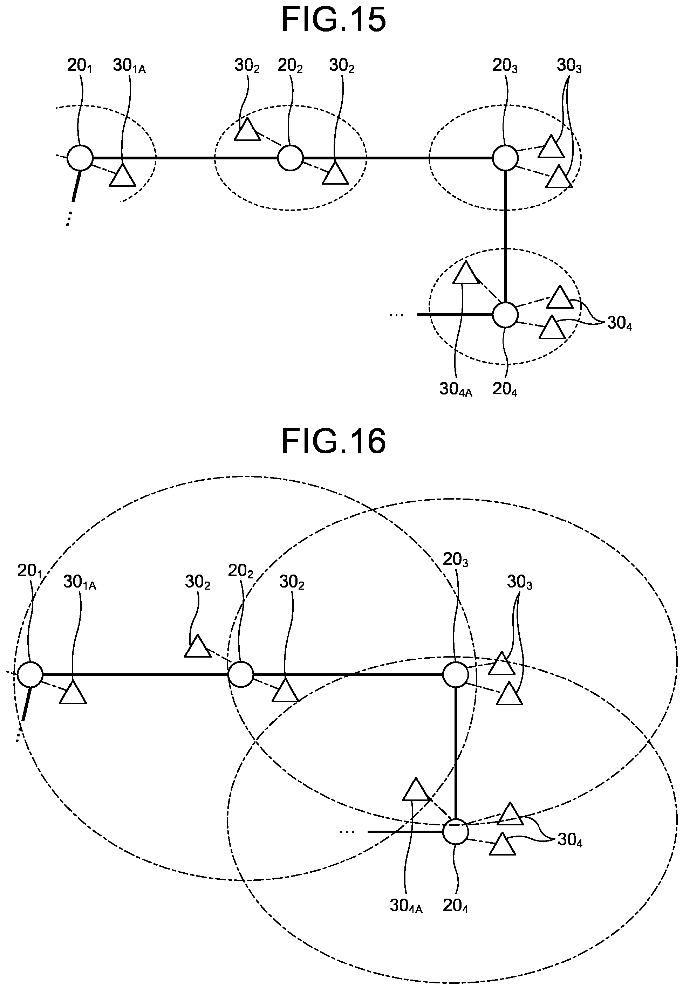

Hereinafter, a wireless communication area of an in-vehicle communication system 1 according to a second embodiment of the disclosure will be described with reference to FIGS. 15 and 16. FIGS. 15 and 16 are diagrams for explaining the wireless communication area of the in-vehicle communication system 1 according to the second embodiment of the disclosure.

As illustrated in FIG. 15, the zone control node 20 of the in-vehicle communication system 1 performs power control in such a manner that a range in which wireless communication can be performed with a device 30 belonging to the zone that the zone control node 20 manages is included in the communication area. As a result, the zone control node 20 can suppress an increase in the power consumption and can reduce interference with wireless communication of the other zone control nodes 20.

On the other hand, as illustrated in FIG. 16, the zone control node 20 can perform wireless communication with devices 30 belonging to other zones by controlling at least one of the transmission power or the reception power to the maximum.

For example, in FIG. 15, a device 30_{4A} is included in a communication area R4 of a zone control node 20₄ and not included in a communication area R2 or R3 of another zone control node 20₂ or 20₃. Therefore, the device 30_{4A} performs wireless communication with the zone control node 20₄ but does not perform wireless communication with the other zone control node 20₂ or 20₃.

However, with the zone control nodes 20₂ and 20₃ performing power control, the device 30_{4A} can perform wireless communication with the other zone control nodes 20₂ and 20₃ in addition to the zone control node 20₄.

Note that the zone control node 20 does not necessarily need to maximize the transmission power or the reception power and is only required to perform control in such a manner that the power is enough to perform wireless communication with devices 30 belonging to other zones.

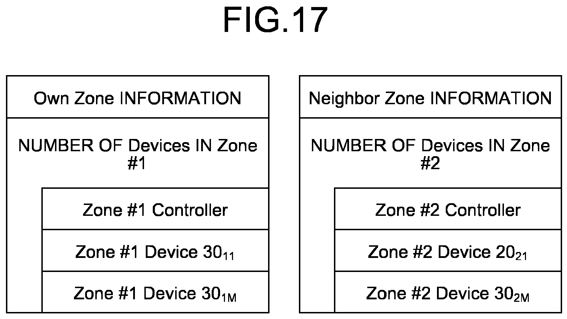

FIG. 17 is a diagram for describing an example of management information managed by the zone control node 20 according to the second embodiment of the disclosure. Here, an example of management information managed by a zone control node 20₁ that manages zone #1 among a plurality of zone control nodes 20 is illustrated.

As described above, by controlling the transmission power (or the reception power), the zone control node 20₁ can perform wireless communication also with devices 30 belonging to zones other than the zone managed by the zone control node 20₁.

Therefore, the zone control node 20₁ manages neighbor zone information) related to the devices 30 in the other zones in which wireless communication can be performed in addition to own zone information related to the device 30 in the zone that the zone control node 20₁ manages.

For example, as a function of Controller of zone #1, the zone control node 20₁ manages the number of devices (M in the example of FIG. 17) included in zone #1 and device information (Zone #1 Device 30₁₁ to Zone #1 Device 30_{1M}) related to the respective devices 30. Note that examples of the device information include ID information for identifying a device 30 and others.

The zone control node 20₁ transfers communication between a device 30 and another communication device (for example, other devices 30, the central control node 10, or other zone control nodes 20) by managing the own zone information related to the devices 30 belonging to zone #1.

As described above, the zone control node 20₁ according to the second embodiment of the disclosure can perform wireless communication with devices 30 in other zones. Therefore, the zone control node 20₁ manages, in addition to the device 30 belonging to zone #1, neighbor zone information related to devices 30 in other zones in which wireless communication can be performed.

For example, the zone control node 20₁ manages the number of devices (M in the example of FIG. 17) included in the adjacent zone #2 and device information (Zone #2 Device 30₂₁ to Zone #2 Device 30_{2M}) related to devices 30 included in zone #2. Note that examples of the device information include ID information for identifying a device 30 and others.

Note that the zone control node 20₁ may manage devices 30 capable of performing direct wireless communication among all the devices 30 belonging to zone #2 as neighbor zone information. Alternatively, the zone control node 20₁ may manage all the devices 30 belonging to zone #2. In this case, the zone control node 20₁ can obtain information regarding the device 30 belonging to zone #2 from the zone control node 20₂ that manages zone #2.

It is presumed here that the device 30 managed as the neighbor zone information by the zone control node 20₁ belongs to one zone #2; however, it is not limited thereto. The zone control node 20₁ may manage a device 30 belonging to a zone other than zone #2 (for example, zone #3) as the neighbor zone information. In this case, the zone control node 20₁ can manage the neighbor zone information for each of zones #2 and #3.

A zone managed as the neighbor zone information by the zone control node 20₁ does not need to be adjacent to zone #1 that the zone control node 20₁ manages as its own zone information. The zone managed as the neighbor zone information is only required to include a device 30 that can perform wireless communication with the zone control node 20₁. The zone may be a zone managed by a node other than the zone control nodes 20₂ and 20₆ (see FIG. 3) directly connected to the zone control node 20₁ by wire.

Note that the management information described above is an example, and the management information is not limited thereto. For example, the zone control node 20₁ may manage the zone and information of the corresponding transmission power (or reception field strength) in association with each other.

As described above, the zone control node 20₁ according to the second embodiment of the disclosure can perform wireless communication with devices 30 in other zones. Therefore, a device 30 according to the second embodiment of the disclosure transmits transmission data to a reception device via a zone control node 20 that manages a zone to which the device 30 does not belong depending on an access control delay with the zone control node 20 that manages the zone to which the device 30 belongs.

Note that the zone control node 20 that manages the zone to which the device 30 belongs is also referred to as its own zone control node 20. The zone control node 20 that manages the zone to which the device 30 does not belong is also referred to as another zone control node 20.

As a result, even in a case where an access control delay occurs in wireless communication with its own zone control node 20, the device 30 can further reduce the delay amount of data arriving at the reception device.

Note that the device 30 may perform wireless communication by maximizing the transmission power or the reception power when performing wireless communication with the other zone control node 20. Alternatively, the device 30 may perform power control so as to have power enough to perform wireless communication with the other zone control node 20 and perform wireless communication with the other zone control node 20.

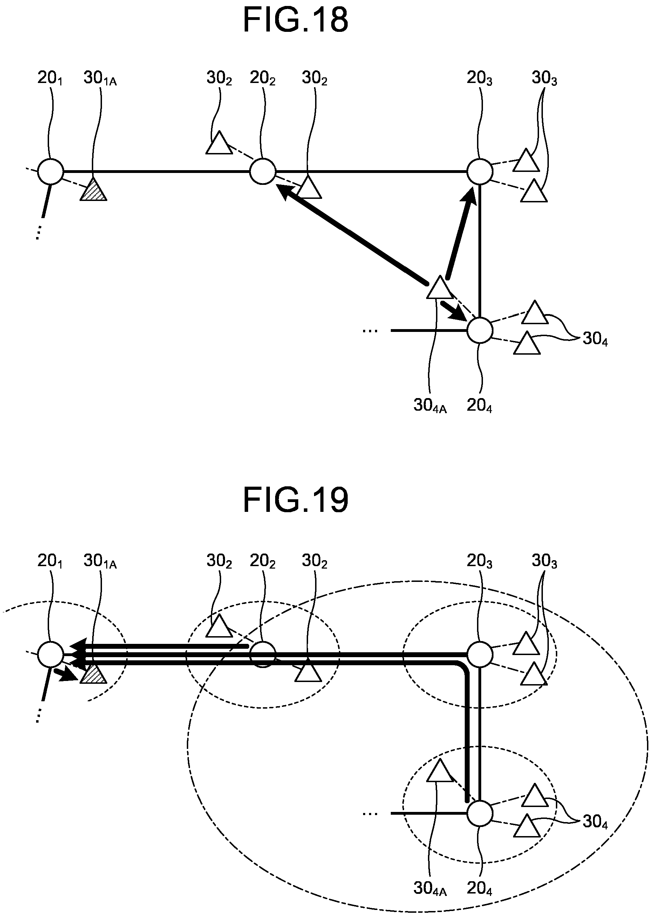

FIGS. 18 and 19 are diagrams for explaining an overview of communication by the in-vehicle communication system 1 according to the second embodiment of the disclosure. It is based on the premise that data is transmitted from the device 30_{4A} to the device 30_{1A}.

The device 30_{4A} is managed by the zone control node 20₄. As such, the device 30_{4A} first acquires an access right from the zone control node 20₄ and attempts to transmit the data.

Here, it is based on the premise that the data volume that can be transmitted in one transmission opportunity acquired by the device 30_{4A} is smaller than the size of the data that the device 30_{4A} attempts to transmit. In this case, the device 30_{4A} cannot transmit all pieces of the data in one transmission opportunity, and an access control delay occurs in the remaining data.

Therefore, as illustrated in FIG. 18, the device 30_{4A} acquires an access right to the other zone control nodes 20₂ and 20₃ and transmits the remaining data.

As described above, in a case where the size of data desired to be transmitted is larger than the maximum data volume that can be transmitted in one transmission opportunity, the device 30_{4A} divides the data desired to be transmitted and transmits the divided data to each of the other zone control nodes 20₂ and 20₃ in addition to its own zone control node 20₄.

As illustrated in FIG. 19, each of its own zone control node 20₄ and the other zone control nodes 20₂ and 20₃ transfers data to the device 30_{1A} that is a reception device via the zone control node 20₁.

As a result, the device 30_{4A} can further reduce the delay amount (delay due to access control) of the data arriving at the reception device.

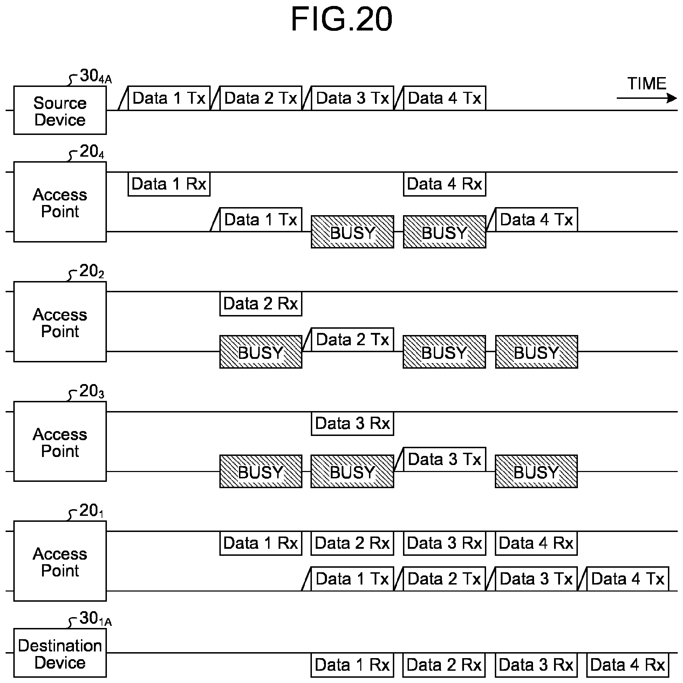

FIG. 20 is a diagram for explaining a detailed example of communication by the in-vehicle communication system 1 according to the second embodiment of the disclosure.

In FIG. 20, the device 30_{4A} which is a transmission device (Source Device) transmits data to the device 30_{1A} which is a reception device (Destination Device). Here, it is based on the premise that the device 30_{4A} divides data into four pieces of Data 1 to Data 4 and transmits the divided data.

As illustrated in FIG. 20, the device 30_{4A} transmits Data 1 having a data size that can be transmitted in one transmission opportunity to its own zone control node 20₄ that is an access point. The device 30_{4A}'s own zone control node 20₄ transmits the received Data 1 to the zone control node 20₁, which is an access point, at next timing. At this point, the other zone control nodes 20 detect that the wired transmission path (for example, Ethernet) is busy and do not transmit data. The zone control node 20₁ transmits the received Data 1 to the device 30_{1A} at next timing.

The device 30_{4A} transmits Data 2 having a data size that can be transmitted in one transmission opportunity to the other zone control node 20₂ which is an access point at timing when its own zone control node 20₄ transmits Data 1 to the zone control node 20₁. The other zone control node 20₂ transmits the received Data 1 to the zone control node 20₁ at next timing. At this point, the other zone control nodes 20 detect that the wired transmission path is busy and do not transmit data. The zone control node 20₁ transmits the received Data 2 to the device 30_{1A} at next timing.

At the timing when the other zone control node 20₂ transmits Data 2 to the zone control node 20₁, the device 30_{4A} transmits Data 3 having a data size that can be transmitted in one transmission opportunity to the other zone control node 20₃ that is an access point. The other zone control node 20₃ transmits the received Data 3 to the zone control node 20₁ at next timing. At this point, the other zone control nodes 20 detect that the wired transmission path is busy and do not transmit data. The zone control node 20₁ transmits the received Data 3 to the device 30_{1A} at next timing.

The device 30_{4A} transmits Data 4 having a data size that can be transmitted in one transmission opportunity to its own zone control node 20₄. The device 30_{4A}'s own zone control node 20₄ transmits the received Data 4 to the zone control node 20₁ which is an access point at next timing. At this point, the other zone control nodes 20 detect that the wired transmission path is busy and do not transmit data. The zone control node 20₁ transmits the received Data 4 to the device 30_{1A} at next timing.

As described above, with the device 30_{4A} transmitting Data 1 to Data 4 via its own zone control node 20₄ and the other zone control nodes 20₂ and 20₃, the zone control node 20₁ and the device 30_{1A} can continuously receive Data 1 to Data 4. Accordingly, device 30_{1A} can receive all of Data 1 to Data 4 with a shorter transmission delay time.

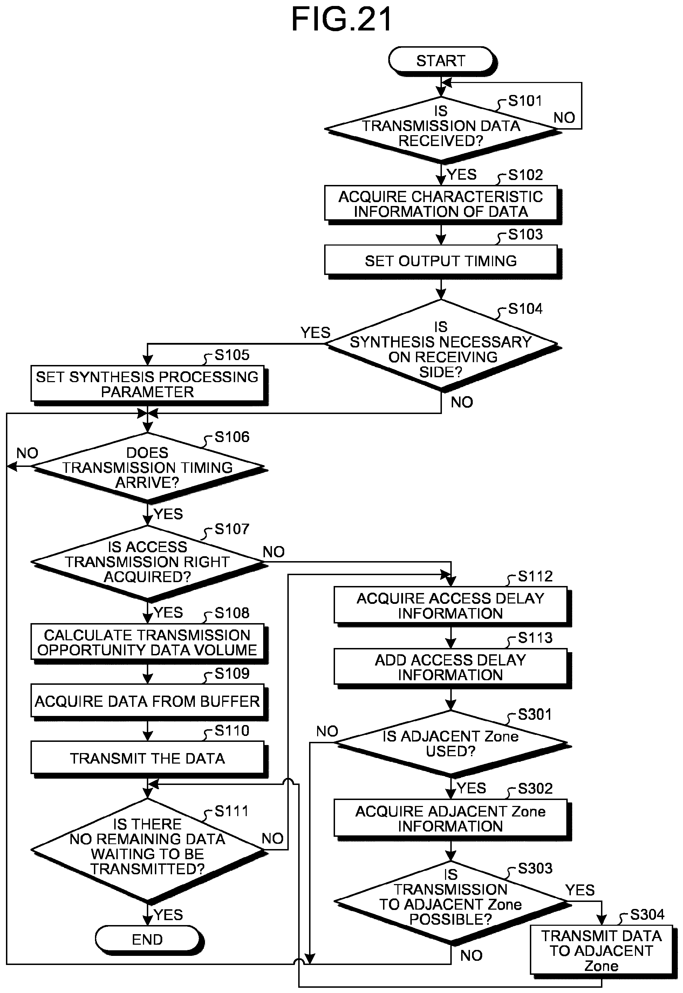

FIG. 21 is a flowchart illustrating a flow of transmission processing according to the second embodiment of the disclosure. Note that the same processes as that in the transmission processing illustrated in FIG. 13 is denoted by the same symbol, and description thereof will be omitted.

In Step S113 illustrated in FIG. 21, the transmission device which has added the access delay information to the delay parameters (delay information) determines whether or not a neighbor (adjacent) zone is available (Step S301). For example, in a case where permission is given from its own zone control node 20, the transmission device determines that a neighbor zone is available.

If no neighbor zone is available (Step S301; No), the transmission device returns to Step S116 and waits for the arrival of transmission timing at which data can be transmitted to its own zone control node 20.

If a neighbor zone is available (Step S301; Yes), the transmission device acquires neighbor zone information from its own zone control node 20 (Step S302). The transmission device obtains, for example, information regarding another zone control node 20 that can communicate, information regarding the transmission power, and others.

Next, the transmission device determines whether or not transmission to the neighbor zone is possible (Step S303). For example, in a case where the transmission device cannot acquire the access right from the other zone control node 20 in the neighbor zone or in a case where transmission cannot be performed with the transmission power acquired in Step S302, the transmission device determines that transmission to the neighbor zone is not possible.

If transmission to the neighbor zone is not possible (Step S303; No), the transmission device returns to Step S116 and waits for the arrival of transmission timing at which data can be transmitted to its own zone control node 20.

If transmission to the neighbor zone is possible (Step S303; Yes), the transmission device transmits data to the neighbor zone (Step S304) and proceeds to Step S111.

Note that the reception processing is the same as the processing illustrated in FIG. 14, and thus description thereof is omitted.

As described above, the wireless communication section 120 (an example of the communication section) of a device 30 according to the first embodiment of the present disclosure transmits data via another zone control node 20 (an example of the second zone control node) that is capable of communicating with the wireless communication section 120.

As a result, the device 30 can further shorten a transmission delay due to access control.

Note that it is presumed here that, in a case where the device 30 operating as the transmission device transmits data to the reception device, the data is transmitted via the other node control zone 20; however, it is not limited thereto. For example, in a case where a device 30 operating as a reception device receives data, the data may be received via another node control zone 20. In this case, the other node control zone 20 uses the management information managed by the other node control zone 20 to transfer the data to a device 30 in another zone capable of wireless communication.

In addition, it is presumed here that the other node control zones 20₂ and 20₃ transfer data to the reception device (device 30_{1A}) via the zone control node 20₁ (see FIGS. 18 and 19); however, it is not limited thereto. For example, in a case where the device 30_{3A} operating as a transmission device can directly perform wireless communication with the zone control node 201, the device 30_{3A} may directly transmit data to the node control zone 20₁. In this case, the node control zone 20₁ that has received the data from the device 30_{3A} transmits the data to the device 30_{1A} belonging to its own zone.

### <<4. Application Examples>>

The technology according to the present disclosure (present technology) can be applied to various products. For example, the technology according to the present disclosure may be implemented as a device to be mounted on a mobile body of any type such as automobiles, electric vehicles, hybrid electric vehicles, motorcycles, bicycles, personal mobility vehicles, airplanes, drones, ships, and robots.

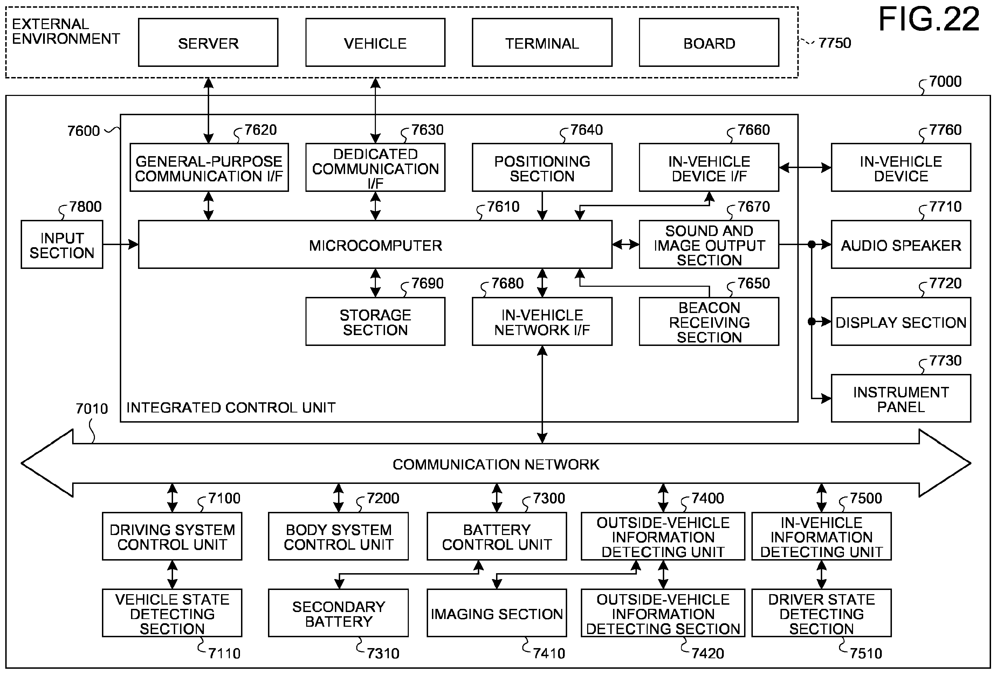

FIG. 22 is a block diagram depicting an example of schematic configuration of a vehicle control system 7000 as an example of a mobile body control system to which the technology according to the embodiment of the disclosure can be applied. The vehicle control system 7000 includes a plurality of electronic control units connected to each other via a communication network 7010. In the example illustrated in FIG. 22, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units may be, for example, an in-vehicle communication network conforming to desired standards such as a controller area network (CAN), a local interconnect network (LIN), a local area network (LAN), or FlexRay (registered trademark).

Each of the control units includes: a microcomputer that performs arithmetic processing in accordance with various programs; a storage section that stores the programs executed by the microcomputer, parameters used for various operations, or others; and a driving circuit that drives various control target devices. Each of the control units further includes: a network interface (I/F) for performing communication with other control units via the communication network 7010; and a communication I/F for performing communication with a device, a sensor, or others within and outside the vehicle by wired communication or radio communication. A functional configuration of the integrated control unit 7600 illustrated in FIG. 22 includes a microcomputer 7610, a general-purpose communication I/F 7620, a dedicated communication I/F 7630, a positioning section 7640, a beacon receiving section 7650, an in-vehicle device I/F 7660, a sound and image output section 7670, an in-vehicle network I/F 7680, and a storage section 7690. The other control units similarly include a microcomputer, a communication I/F, a storage section, and others.

The driving system control unit 7100 controls the operation of devices related to the driving system of the vehicle in accordance with various programs. For example, the driving system control unit 7100 functions as a control device for a driving force generating device for generating the driving force of the vehicle, such as an internal combustion engine or a driving motor, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110 includes, for example, at least one of a gyro sensor that detects the angular velocity of axial rotational movement of the vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110 and controls the internal combustion engine, the driving motor, an electric power steering device, the brake device, and the like.

The body system control unit 7200 controls the operation of various devices provided to the vehicle body in accordance with various programs. For example, the body system control unit 7200 functions as a control device for a keyless entry system, a smart key system, a power window device, or various lamps such as a headlamp, a rear lamp, a brake lamp, a turn signal, or a fog lamp. In this case, radio waves transmitted from a mobile device as an alternative to a key or signals of various switches can be input to the body system control unit 7200. The body system control unit 7200 receives input of these radio waves or signals and controls a door lock device, the power window device, the lamps, and others of the vehicle.

The battery control unit 7300 controls a secondary battery 7310, which is a power supply source for the driving motor, in accordance with various programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals and performs control for regulating the temperature of the secondary battery 7310 or control for a cooling device included in the battery device or the like.

The outside-vehicle information detecting unit 7400 detects information about the outside of the vehicle mounted with the vehicle control system 7000. For example, the outside-vehicle information detecting unit 7400 is connected with at least one of an imaging section 7410 or an outside-vehicle information detecting section 7420. The imaging section 7410 includes at least one of a time-of-flight (ToF) camera, a stereo camera, a monocular camera, an infrared camera, or other cameras. The outside-vehicle information detecting section 7420 includes, for example, at least one of an environmental sensor for detecting current atmospheric conditions or weather conditions or a surrounding information detecting sensor for detecting another vehicle, an obstacle, a pedestrian, or the like around the vehicle mounted with the vehicle control system 7000.

The environmental sensor may be, for example, at least one of a rain drop sensor for detecting rain, a fog sensor for detecting a fog, a sunshine sensor for detecting the degree of sunshine, and a snow sensor for detecting a snowfall. The surrounding information detecting sensor may be at least one of an ultrasonic sensor, a radar device, or a light detection and ranging or laser imaging detection and ranging (LIDAR) device. Each of the imaging section 7410 and the outside-vehicle information detecting section 7420 may be each provided as an independent sensor or device or may be provided as a device in which a plurality of sensors or devices is integrated.

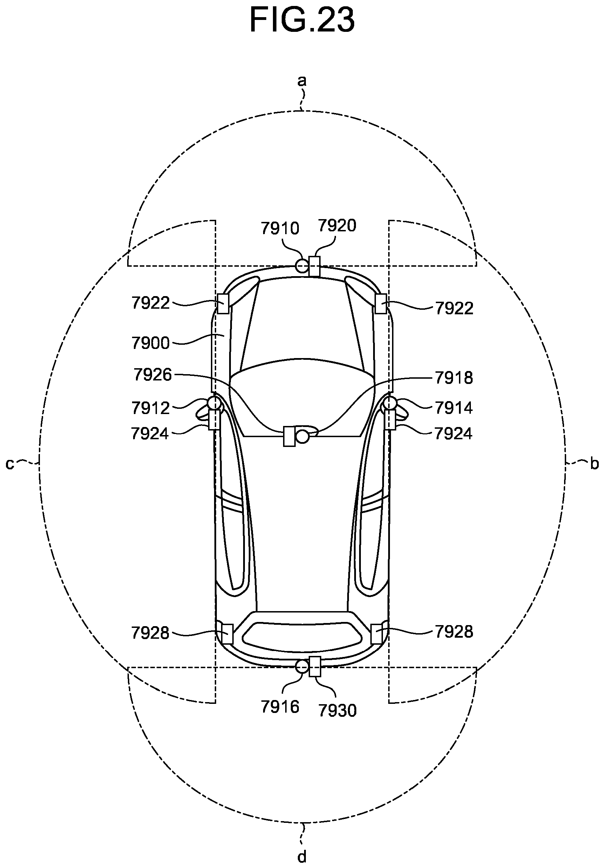

FIG. 23 is a diagram illustrating an example of installation positions of imaging sections 7410 and outside-vehicle information detecting sections 7420. Imaging sections 7910, 7912, 7914, 7916, and 7918 are, for example, each arranged at at least one of positions of a front nose, sideview mirrors, a rear bumper, a back door of a vehicle 7900, or an upper portion of a windshield inside the cabin of the vehicle. The imaging section 7910 provided to the front nose and the imaging section 7918 provided to the upper portion of the windshield inside the cabin of the vehicle obtain mainly images ahead of the vehicle 7900. The imaging sections 7912 and 7914 provided to the sideview mirrors obtain mainly images on the sides of the vehicle 7900. The imaging section 7916 provided to the rear bumper or the back door obtains mainly an image behind the vehicle 7900. The imaging section 7918 provided to the upper portion of the windshield inside the cabin of the vehicle is used mainly to detect a preceding vehicle, a pedestrian, an obstacle, a traffic signal, a traffic sign, a lane, or the like.

Incidentally, FIG. 23 depicts an example of an imaging range of each of the imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data captured by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900, and the upper portion of the windshield inside the cabin of the vehicle may be, for example, an ultrasonic sensor or a radar device. The outside-vehicle information detecting sections 7920, 7926, and 7930 provided to the front nose, the rear bumper, and the back door of the vehicle 7900 and the upper portion of the windshield inside the cabin of the vehicle may be a LIDAR device, for example. These outside-vehicle information detecting sections 7920 to 7930 are used mainly to detect a preceding vehicle, a pedestrian, an obstacle, or the like.

Returning to FIG. 22, the description will be continued. The outside-vehicle information detecting unit 7400 causes the imaging section 7410 to capture an image of the outside of the vehicle and receives the captured image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like and receives information of a received reflected wave. On the basis of the received information, the outside-vehicle information detecting unit 7400 may perform processing of detecting an object such as a human, a vehicle, an obstacle, a sign, or a character on a road surface or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like or processing of detecting a distance thereto. The outside-vehicle information detecting unit 7400 may subject the received image data to processing such as distortion correction or alignment and combine image data captured by a plurality of different imaging sections 7410 to generate a bird's-eye image or a panoramic image. The outside-vehicle information detecting unit 7400 may perform viewpoint conversion processing using the image data captured by the different imaging sections 7410.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that captures an image of the driver, a biosensor that detects biological information of the driver, a microphone that collects sound inside the cabin of the vehicle, or the like. The biosensor is, for example, disposed in a seat surface, the steering wheel, or the like and detects biological information of an occupant seated at the seat or a driver holding the steering wheel. On the basis of detection information input from the driver state detecting section 7510, the in-vehicle information detecting unit 7500 may calculate a degree of fatigue or a degree of concentration of the driver or may determine whether or not the driver is dozing. The in-vehicle information detecting unit 7500 may subject an audio signal that has been collected to processing such as noise canceling processing.

The integrated control unit 7600 controls overall operation within the vehicle control system 7000 in accordance with various programs. The integrated control unit 7600 is connected with an input section 7800. The input section 7800 is implemented by a device that can be operated by an occupant by input, such as a touch panel, a button, a microphone, a switch, or a lever. The integrated control unit 7600 may be supplied with data obtained by voice recognition of voice input by a microphone. The input section 7800 may, for example, be a remote control device using infrared rays or other radio waves or an external connecting device such as a mobile telephone or a personal digital assistant (PDA) that supports operation of the vehicle control system 7000. The input section 7800 may be, for example, a camera. In this case, an occupant can input information by gesture. Alternatively, data may be input which is obtained by detecting the motion of a wearable device that an occupant wears. Furthermore, the input section 7800 may include, for example, an input control circuit or the like that generates an input signal on the basis of information input by an occupant or the like using the input section 7800 and outputs the generated input signal to the integrated control unit 7600. An occupant or the like inputs various types of data or gives an instruction for processing operation to the vehicle control system 7000 by operating the input section 7800.

The storage section 7690 may include a read only memory (ROM) that stores various programs executed by a microcomputer and a random access memory (RAM) that stores various parameters, arithmetic results, sensor values, or the like. In addition, the storage section 7690 may be implemented by a magnetic storage device such as a hard disc drive (HDD), a semiconductor storage device, an optical storage device, a magneto-optical storage device, or the like.

The general-purpose communication I/F 7620 is a general-purpose communication I/F that mediates communication with various devices present in an external environment 7750. The general-purpose communication I/F 7620 may implement a cellular communication protocol such as global system of mobile communications (GSM (registered trademark)), WiMAX (registered trademark), long term evolution (LTE (registered trademark)), or LTE-advanced (LTE-A) or another wireless communication protocol such as wireless LAN (referred to also as Wi-Fi (registered trademark) or Bluetooth (registered trademark). The general-purpose communication I/F 7620 may be, for example, connected to an apparatus (for example, an application server or a control server) present on an external network (for example, the Internet, a cloud network, or a company-specific network) via a base station or an access point. In addition, the general-purpose communication I/F 7620 may be connected to a terminal present in the vicinity of the vehicle (for example, a terminal of the driver, a pedestrian, or a store or a machine type communication (MTC) terminal) using peer to peer (P2P) technology, for example.

The dedicated communication I/F 7630 is a communication I/F that supports a communication protocol developed for use in vehicles. The dedicated communication I/F 7630 may implement a standard protocol such as wireless access in vehicle environment (WAVE), which is a combination of IEEE 802.11p for a lower layer and IEEE 1609 for a higher layer, dedicated short range communications (DSRC), or a cellular communication protocol. The dedicated communication I/F 7630 typically carries out V2X communication which is a concept including one or more of vehicle to vehicle communication, vehicle to infrastructure communication, vehicle to home communication, and vehicle to pedestrian communication.

The positioning section 7640, for example, performs positioning by receiving global navigation satellite system (GNSS) signals from GNSS satellites (for example, global positioning system (GPS) signals from GPS satellites) and generates positional information including the latitude, the longitude, and the altitude of the vehicle. Incidentally, the positioning section 7640 may identify the current position by exchanging signals with a wireless access point or may obtain the positional information from a terminal such as a mobile telephone, a PHS, or a smart phone that has a positioning function.

The beacon receiving section 7650, for example, receives a radio wave or an electromagnetic wave transmitted from a radio station or the like installed on a road and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection among the microcomputer 7610 and various in-vehicle devices 7760 present within the vehicle. The in-vehicle device I/F 7660 may establish wireless connection using a wireless communication protocol such as a wireless LAN, Bluetooth (registered trademark), near field communication (NFC), or wireless USB (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) (not illustrated). The in-vehicle devices 7760 may include, for example, at least one of a mobile device or a wearable device possessed by an occupant or an information device carried into or attached to the vehicle. The in-vehicle devices 7760 may also include a navigation device that searches for a route to a desired destination. The in-vehicle device I/F 7660 exchanges control signals or data signals with these in-vehicle devices 7760.

The in-vehicle network I/F 7680 is an interface that mediates communication between the microcomputer 7610 and the communication network 7010. The in-vehicle network I/F 7680 transmits and receives signals or the like in conformity with a predetermined protocol supported by the communication network 7010.

The microcomputer 7610 of the integrated control unit 7600 controls the vehicle control system 7000 in accordance with various programs on the basis of information obtained via at least one of the general-purpose communication I/F 7620, the dedicated communication I/F 7630, the positioning section 7640, the beacon receiving section 7650, the in-vehicle device I/F 7660, or the in-vehicle network I/F 7680. For example, the microcomputer 7610 may calculate a control target value for the driving force generating device, the steering mechanism, or the braking device on the basis of the obtained information about the inside and the outside of the vehicle and output a control command to the driving system control unit 7100. For example, the microcomputer 7610 may perform cooperative control intended to implement functions of an advanced driver assistance system (ADAS) including collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for autonomous driving or the like for travelling autonomously without depending on the operation by the driver by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure or a person and create local map information including information of the surroundings of the current position of the vehicle on the basis of information obtained via at least one of the general-purpose communication I/F 7620, the dedicated communication I/F 7630, the positioning section 7640, the beacon receiving section 7650, the in-vehicle device I/F 7660, or the in-vehicle network I/F 7680. In addition, the microcomputer 7610 may predict danger such as collision of the vehicle, approaching of a pedestrian or the like, or an entry to a closed road on the basis of the obtained information and generate a warning signal. The warning signal may be, for example, a signal for producing a warning sound or lighting a warning lamp.

The sound and image output section 7670 transmits an output signal of at least one of sound or an image to an output device capable of visually or auditorily notifying information to an occupant of the vehicle or to the outside of the vehicle. In the example of FIG. 22, an audio speaker 7710, a display section 7720, and an instrument panel 7730 are illustrated as examples of the output device. The display section 7720 may include, for example, at least one of an on-board display or a head-up display. The display section 7720 may have an augmented reality (AR) display function. The output device may be another device, other than these devices, such as headphones, a wearable device such as an eyeglass type display worn by an occupant, a projector, or a lamp. In a case where the output device is a display device, the display device visually displays results obtained by various types of processing performed by the microcomputer 7610 or information received from another control unit in various forms such as text, an image, a table, or a graph. In addition, in a case where the output device is an audio output device, the audio output device converts an audio signal including reproduced audio data, sound data, or the like into an analog signal and auditorily outputs the analog signal.

Incidentally, at least two control units connected to each other via the communication network 7010 in the example illustrated in FIG. 22 may be integrated into one control unit. Alternatively, each individual control unit may include a plurality of control units. Furthermore, the vehicle control system 7000 may include another control unit that is not illustrated. In addition, some or all of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that a computer program for implementing each of the functions of the in-vehicle communication device 100 according to the embodiment described with reference to FIG. 5 can be implemented in any one of the control units or others. It is also possible to provide a computer-readable recording medium storing such a computer program. The recording medium is, for example, a magnetic disk, an optical disk, a magneto-optical disk, a flash memory, or the like. Alternatively, the computer program described above may be distributed via, for example, a network without using a recording medium.

In the vehicle control system 7000 described above, the in-vehicle communication system 1 according to the embodiment described with reference to FIG. 3 can be applied to the vehicle control system 7000 of the application example illustrated in FIG. 22. For example, the central control node 10 of the in-vehicle communication system 1 corresponds to the integrated control unit 7600. For example, the devices 30 correspond to the units, the sections, the in-vehicle device 7760, or others. A zone control node 20 corresponds to a relay device (not illustrated) that relays communication of a device 30 in the communication network 7010.

### <<5. Other Embodiments>>

In each of the embodiments described above, the central control node 10 controls the communication; however, it is not limited thereto. For example, each of the zone control nodes 20 may independently control the communication.

In each of the embodiments described above, the communication between the central control node 10 and the zone control nodes 20 is wired communication; however, it is not limited thereto. Communication between the central control node 10 and the zone control nodes 20 may be wireless communication or both wired and wireless communication. In addition, the communication between the zone control nodes 20 and the devices 30 is wireless communication; however, it is not limited thereto. The communication between the zone control nodes 20 and the devices 30 may be wired communication or both wired and wireless communication.

Furthermore, in each of the above-described embodiments, the data transmitted by the devices 30 is the captured image by the camera; however, it is not limited thereto. The data transmitted by the devices 30 may include various types of information such as a depth image, audio information, or the temperature in the vehicle C.

### <<6. Summary>>

Each step in the processing executed by each of the devices in the present specification does not necessarily need to be processed in time series in the order described in the drawings. For example, each step in the processing executed by each of the devices may be processed in an order different from the order described in the drawings or may be processed in parallel.

In addition, it is also possible to create a computer program for causing hardware such as a CPU, a ROM, and a RAM built in each of the devices to exhibit a function equivalent to that of the configuration of the device described above. Furthermore, a storage medium storing the computer program can also be provided. Furthermore, by configuring each functional block illustrated in the functional block diagram by hardware, a series of processing can be implemented by hardware.

Although the preferred embodiments of the disclosure have been described in detail by referring to the accompanying drawings, the technical scope of the disclosure is not limited to such examples. It is obvious that a person having ordinary knowledge in the technical field of the disclosure can conceive various modifications or variations within the scope of the technical idea described in the claims, and it is naturally understood that these also belong to the technical scope of the invention as long as said modifications and variations are encompassed within the scope of the invention as defined by the appended claims.

Incidentally, the effects described in the present specification are merely illustrative or exemplary and are not limiting. That is, the technology according to the present disclosure can achieve other effects that are obvious to those skilled in the art from the description of the present specification together with the above effects.

### Reference Signs List

1 IN-VEHICLE COMMUNICATION SYSTEM
10 CENTRAL CONTROL NODE
20 ZONE CONTROL NODE
30 DEVICE
100 IN-VEHICLE COMMUNICATION DEVICE
110 ANTENNA SECTION
120 WIRELESS COMMUNICATION SECTION
130 NETWORK COMMUNICATION SECTION
140 STORAGE SECTION
150 CONTROL SECTION

## Claims

1. An in-vehicle communication device (100) comprising:
a communication section (120) configured to wirelessly communicate with a first zone control node (20) disposed in a first zone among a plurality of divided zones in a vehicle (C) and transmit first data to a reception device (10, 30) via the first zone control node; and
a control section (150) configured to add, to the first data, synthesis information to be used in a case where the reception device combines the first data and another piece of data,
wherein the synthesis information includes at least one of:
- information indicating that an access control delay has occurred,
- information indicating a delay amount caused by the access control delay,
- synthesis target information indicating that the first data is a target of synthesis processing,
- output timing information regarding timing at which the reception device outputs data,
- information indicating that the first data, collected in the first zone, is combined with the other piece of data collected in a second zone different from the first zone, and
- information indicating output timing of composite data obtained by combining the first data, collected in the first zone, and the other piece of data collected in a second zone different from the first zone.

2. The in-vehicle communication device according to claim 1,
wherein the communication section (120) is configured to transmit the first data of a maximum transmission amount in one transmission opportunity in a case where an access right is acquired.

3. The in-vehicle communication device according to claim 1 or 2,
wherein the communication section (120) is configured to transmit the first data via a second zone control node (20) disposed in a second zone different from the first zone to which the in-vehicle communication device belongs, and
the second zone control node (20) can wirelessly communicate with the communication section.

4. The in-vehicle communication device according to claim 3,
wherein the control section (150) is configured to divide the first data into a plurality of pieces of divided data in a case where a data volume of the first data is larger than a maximum transmission volume in one transmission opportunity acquired by the communication section, and
the communication section (120) is configured to transmit the divided data via the second zone control node.

5. The in-vehicle communication device according to claim 3 or 4,
wherein the communication section (120) is configured to control transmission power or reception power in association with the second zone control node.

6. An in-vehicle communication system (1) comprising
a transmission device (100; 10, 30) and a reception device (100; 10, 30) belonging to any one of a plurality of divided zones in a vehicle (C),
wherein the transmission device (100; 10, 30) includes:
a communication section (120) configured to perform wireless communication with a first zone control node (20) arranged in the zone to which the transmission device belongs and transmit first data to the reception device via the first zone control node; and
a control section (150) configured to add, to the first data, synthesis information to be used in a case where the reception device combines the first data and another piece of data, and
the reception device (100; 10, 30) includes:
a communication section (120) configured to perform wireless communication with a second zone control node (20) arranged in the zone to which the reception device belongs and receive the first data from the transmission device via the second zone control node; and
a control section (150) configured to combine the first data and the other piece of data using the synthesis information,
wherein the synthesis information includes at least one of:
- information indicating that an access control delay has occurred,
- information indicating a delay amount caused by the access control delay,
- synthesis target information indicating that the first data is a target of synthesis processing,
- output timing information regarding timing at which the reception device outputs data,
- information indicating that the first data, collected in the first zone, is combined with the other piece of data collected in a second zone different from the first zone, and
- information indicating output timing of composite data obtained by combining the first data, collected in the first zone, and the other piece of data collected in a second zone different from the first zone.

7. A communication method comprising:
wirelessly communicating with a first zone control node (20) disposed in a first zone among a plurality of divided zones in a vehicle (C) and transmitting first data to a reception device (30) via the first zone control node; and
adding, to the first data, synthesis information to be used in a case where the reception device combines the first data and another piece of data,
wherein the synthesis information includes at least one of:
- information indicating that an access control delay has occurred,
- information indicating a delay amount caused by the access control delay,
- synthesis target information indicating that the first data is a target of synthesis processing,
- output timing information regarding timing at which the reception device outputs data,
- information indicating that the first data, collected in the first zone, is combined with the other piece of data collected in a second zone different from the first zone, and
- information indicating output timing of composite data obtained by combining the first data, collected in the first zone, and the other piece of data collected in a second zone different from the first zone.

## Patentansprüche

1. Fahrzeuginterne Kommunikationsvorrichtung (100), umfassend:
einen Kommunikationsabschnitt (120), der konfiguriert ist, um mit einem ersten Zonensteuerknoten (20) drahtlos zu kommunizieren, der in einer ersten Zone unter einer Vielzahl von unterteilten Zonen in einem Fahrzeug (C) angeordnet ist, und erste Daten über den ersten Zonensteuerknoten an eine Empfangsvorrichtung (10, 30) zu übertragen; und
einen Steuerabschnitt (150), der konfiguriert ist, um Syntheseinformationen zu den ersten Daten hinzuzufügen, die in einem Fall verwendet werden sollen, in dem die Empfangsvorrichtung die ersten Daten und ein anderes Datenstück kombiniert,
wobei die Syntheseinformationen mindestens eines einschließen von
- Informationen, die anzeigen, dass eine Zugriffssteuerungsverzögerung aufgetreten ist,
- Informationen, die eine Verzögerungsmenge anzeigen, die durch die Zugriffssteuerungsverzögerung verursacht wird,
- Synthesezielinformationen, die anzeigen, dass die ersten Daten ein Ziel einer Syntheseverarbeitung sind,
- Ausgeben von Zeitpunktinformationen bezüglich des Zeitpunkts, zu dem die Empfangsvorrichtung Daten ausgibt,
- Informationen, die anzeigen, dass die ersten Daten, die in der ersten Zone gesammelt werden, mit dem anderen Datenstück kombiniert werden, das in einer zweiten Zone gesammelt wird, die sich von der ersten Zone unterscheidet, und
- Informationen, die einen Ausgabezeitpunkt von zusammengesetzten Daten anzeigen, die durch Kombinieren der ersten Daten, die in der ersten Zone gesammelt werden, und des anderen Datenstücks, das in einer zweiten Zone gesammelt wird, die sich von der ersten Zone unterscheidet, erhalten werden.

2. Fahrzeuginterne Kommunikationsvorrichtung nach Anspruch 1,
wobei der Kommunikationsabschnitt (120) konfiguriert ist, um die ersten Daten einer maximalen Übertragungsmenge in einer Übertragungsgelegenheit zu übertragen, in einem Fall, in dem ein Zugriffsrecht erlangt wird.

3. Fahrzeuginterne Kommunikationsvorrichtung nach Anspruch 1 oder 2,
wobei der Kommunikationsabschnitt (120) konfiguriert ist, um die ersten Daten über einen zweiten Zonensteuerknoten (20) zu übertragen, der in einer zweiten Zone angeordnet ist, die sich von der ersten Zone unterscheidet, zu der die fahrzeuginterne Kommunikationsvorrichtung gehört, und
der zweite Zonensteuerknoten (20) mit dem Kommunikationsabschnitt drahtlos kommunizieren kann.

4. Fahrzeuginterne Kommunikationsvorrichtung nach Anspruch 3,
wobei der Steuerabschnitt (150) konfiguriert ist, um die ersten Daten in eine Vielzahl von Stücken unterteilter Daten zu unterteilen, in einem Fall, in dem ein Datenvolumen der ersten Daten größer als ein maximales Übertragungsvolumen in einer Übertragungsgelegenheit ist, das durch den Kommunikationsabschnitt erlangt wird, und
der Kommunikationsabschnitt (120) konfiguriert ist, um die unterteilten Daten über den zweiten Zonensteuerknoten zu übertragen.

5. Fahrzeuginterne Kommunikationsvorrichtung nach Anspruch 3 oder 4,
wobei der Kommunikationsabschnitt (120) konfiguriert ist, um eine Übertragungsleistung oder eine Empfangsleistung in Verbindung mit dem zweiten Zonensteuerknoten zu steuern.

6. Fahrzeuginterne Kommunikationsvorrichtung (1), umfassend
eine Übertragungsvorrichtung (100; 10, 30) und eine Empfangsvorrichtung (100; 10, 30), die zu einer beliebigen einer Vielzahl von unterteilten Zonen in einem Fahrzeug (C) gehören,
wobei die Übertragungsvorrichtung (100; 10, 30) umfasst:
einen Kommunikationsabschnitt (120), der konfiguriert ist, um eine drahtlose Kommunikation mit einem ersten Zonensteuerknoten (20) durchzuführen, der in der Zone angeordnet ist, zu der die Übertragungsvorrichtung gehört, und erste Daten über den ersten Zonensteuerknoten an die Empfangsvorrichtung zu übertragen; und
einen Steuerabschnitt (150), der konfiguriert ist, um Syntheseinformationen zu den ersten Daten hinzuzufügen, die in einem Fall verwendet werden sollen, in dem die Empfangsvorrichtung die ersten Daten und ein anderes Datenstück kombiniert, und
die Empfangsvorrichtung (100; 10, 30) einschließt:
einen Kommunikationsabschnitt (120), der konfiguriert ist, um die drahtlose Kommunikation mit einem zweiten Zonensteuerknoten (20) durchzuführen, der in der Zone angeordnet ist, zu der die Empfangsvorrichtung gehört, und die ersten Daten von der Übertragungsvorrichtung über den zweiten Zonensteuerknoten zu empfangen; und
einen Steuerabschnitt (150), der konfiguriert ist, um die ersten Daten und das andere Datenstück unter Verwendung der Syntheseinformationen zu kombinieren,
wobei die Syntheseinformationen mindestens eines einschließen von:
- Informationen, die anzeigen, dass eine Zugriffssteuerungsverzögerung aufgetreten ist,
- Informationen, die eine Verzögerungsmenge anzeigen, die durch die Zugriffssteuerungsverzögerung verursacht wird,
- Synthesezielinformationen, die anzeigen, dass die ersten Daten ein Ziel einer Syntheseverarbeitung sind,
- Ausgeben von Zeitpunktinformationen bezüglich des Zeitpunkts, zu dem die Empfangsvorrichtung Daten ausgibt,
- Informationen, die anzeigen, dass die ersten Daten, die in der ersten Zone gesammelt werden, mit dem anderen Datenstück kombiniert werden, das in einer zweiten Zone gesammelt wird, die sich von der ersten Zone unterscheidet, und
- Informationen, die einen Ausgabezeitpunkt von zusammengesetzten Daten anzeigen, die durch Kombinieren der ersten Daten, die in der ersten Zone gesammelt werden, und des anderen Datenstücks, das in einer zweiten Zone gesammelt wird, die sich von der ersten Zone unterscheidet, erhalten werden.

7. Kommunikationsverfahren, umfassend:
drahtloses Kommunizieren mit einem ersten Zonensteuerknoten (20), der in einer ersten Zone unter einer Vielzahl von unterteilten Zonen in einem Fahrzeug (C) angeordnet ist, und Übertragen von ersten Daten über den ersten Zonensteuerknoten an eine Empfangsvorrichtung (30); und
Hinzufügen von Syntheseinformationen zu den ersten Daten, die in einem Fall verwendet werden sollen, in dem die Empfangsvorrichtung die ersten Daten und ein anderes Datenstück kombiniert,
wobei die Syntheseinformationen mindestens eines einschließen von:
- Informationen, die anzeigen, dass eine Zugriffssteuerungsverzögerung aufgetreten ist,
- Informationen, die eine Verzögerungsmenge anzeigen, die durch die Zugriffssteuerungsverzögerung verursacht wird,
- Synthesezielinformationen, die anzeigen, dass die ersten Daten ein Ziel einer Syntheseverarbeitung sind,
- Ausgeben von Zeitpunktinformationen bezüglich des Zeitpunkts, zu dem die Empfangsvorrichtung Daten ausgibt,
- Informationen, die anzeigen, dass die ersten Daten, die in der ersten Zone gesammelt werden, mit dem anderen Datenstück kombiniert werden, das in einer zweiten Zone gesammelt wird, die sich von der ersten Zone unterscheidet, und
- Informationen, die einen Ausgabezeitpunkt von zusammengesetzten Daten anzeigen, die durch Kombinieren der ersten Daten, die in der ersten Zone gesammelt werden, und des anderen Datenstücks, das in einer zweiten Zone gesammelt wird, die sich von der ersten Zone unterscheidet, erhalten werden.

## Revendications

1. Dispositif de communication embarqué (100) comprenant :
une section de communication (120) configurée pour communiquer sans fil avec un premier nœud de commande de zone (20) disposé dans une première zone parmi une pluralité de zones divisées dans un véhicule (C) et transmettre des premières données à un dispositif de réception (10, 30) par l'intermédiaire du premier nœud de commande de zone ; et
une section de commande (150) configurée pour ajouter, aux premières données, des informations de synthèse à utiliser dans un cas où le dispositif de réception combine les premières données et un autre élément de données,
dans lequel les informations de synthèse comportent au moins l'une parmi
- des informations indiquant qu'un retard de commande d'accès s'est produit,
- des informations indiquant une quantité de retard causée par le retard de commande d'accès,
- des informations de cible de synthèse indiquant que les premières données sont une cible d'un traitement de synthèse,
- des informations de moment de sortie concernant un moment où le dispositif de réception sort des données,
- des informations indiquant que les premières données, collectées dans la première zone, sont combinées avec l'autre élément de données collecté dans une seconde zone différente de la première zone, et
- des informations indiquant un moment de sortie de données composites obtenues en combinant les premières données, collectées dans la première zone, et l'autre élément de données collecté dans une seconde zone différente de la première zone.

2. Dispositif de communication embarqué selon la revendication 1,
dans lequel la section de communication (120) est configurée pour transmettre les premières données d'une quantité de transmission maximale en une opportunité de transmission dans un cas où un droit d'accès est acquis.

3. Dispositif de communication embarqué selon la revendication 1 ou 2,
dans lequel la section de communication (120) est configurée pour transmettre les premières données par l'intermédiaire d'un second nœud de commande de zone (20) disposé dans une seconde zone différente de la première zone à laquelle appartient le dispositif de communication embarqué, et
le second nœud de commande de zone (20) peut communiquer sans fil avec la section de communication.

4. Dispositif de communication embarqué selon la revendication 3,
dans lequel la section de commande (150) est configurée pour diviser les premières données en une pluralité d'éléments de données divisés dans un cas où un volume de données des premières données est supérieur à un volume de transmission maximum dans une opportunité de transmission acquise par la section de communication, et
la section de communication (120) est configurée pour transmettre les données divisées par l'intermédiaire du second nœud de commande de zone.

5. Dispositif de communication embarqué selon la revendication 3 ou 4,
dans lequel la section de communication (120) est configurée pour commander une puissance de transmission ou une puissance de réception en association avec le second nœud de commande de zone.

6. Système de communication embarqué (1) comprenant
un dispositif de transmission (100 ; 10, 30) et un dispositif de réception (100 ; 10, 30) appartenant à l'une quelconque d'une pluralité de zones divisées dans un véhicule (C),
dans lequel le dispositif de transmission (100 ; 10, 30) comporte :
une section de communication (120) configurée pour réaliser une communication sans fil avec un premier nœud de commande de zone (20) agencé dans la zone à laquelle appartient le dispositif de transmission et pour transmettre des premières données au dispositif de réception par l'intermédiaire du premier nœud de commande de zone ; et
une section de commande (150) configurée pour ajouter, aux premières données, des informations de synthèse à utiliser dans un cas où le dispositif de réception combine les premières données et un autre élément de données, et
le dispositif de réception (100 ; 10, 30) comporte :
une section de communication (120) configurée pour réaliser une communication sans fil avec un second nœud de commande de zone (20) agencé dans la zone à laquelle appartient le dispositif de réception et pour recevoir les premières données à partir du dispositif de transmission par l'intermédiaire du second nœud de commande de zone ; et
une section de commande (150) configurée pour combiner les premières données et l'autre élément de données à l'aide des informations de synthèse,
dans lequel les informations de synthèse comportent au moins l'une parmi :
- des informations indiquant qu'un retard de commande d'accès s'est produit,
- des informations indiquant une quantité de retard causée par le retard de commande d'accès,
- des informations de cible de synthèse indiquant que les premières données sont une cible d'un traitement de synthèse,
- des informations de moment de sortie concernant un moment où le dispositif de réception sort des données,
- des informations indiquant que les premières données, collectées dans la première zone, sont combinées avec l'autre élément de données collecté dans une seconde zone différente de la première zone, et
- des informations indiquant un moment de sortie de données composites obtenues en combinant les premières données, collectées dans la première zone, et l'autre élément de données collecté dans une seconde zone différente de la première zone.

7. Procédé de communication comprenant :
la communication sans fil avec un premier nœud de commande de zone (20) disposé dans une première zone parmi une pluralité de zones divisées dans un véhicule (C) et la transmission de premières données à un dispositif de réception (30) par l'intermédiaire du premier nœud de commande de zone ; et
l'ajout, aux premières données, d'informations de synthèse à utiliser dans un cas où le dispositif de réception combine les premières données et un autre élément de données,
dans lequel les informations de synthèse comportent au moins l'une parmi :
- des informations indiquant qu'un retard de commande d'accès s'est produit,
- des informations indiquant une quantité de retard causée par le retard de commande d'accès,
- des informations de cible de synthèse indiquant que les premières données sont une cible d'un traitement de synthèse,
- des informations de moment de sortie concernant un moment où le dispositif de réception sort des données,
- des informations indiquant que les premières données, collectées dans la première zone, sont combinées avec l'autre élément de données collecté dans une seconde zone différente de la première zone, et
- des informations indiquant un moment de sortie de données composites obtenues en combinant les premières données, collectées dans la première zone, et l'autre élément de données collecté dans une seconde zone différente de la première zone.
